# EUROPEAN PATENT APPLICATION

(11) **EP 4 834 078 A1**
(43) Date of publication of application: **04.11.2026**
(21) Application number: 24912519.6
(22) Date of filing: 17.12.2024
(51) Int. Cl.: A01C 11/00

(54) **AGRICULTURAL SEEDLING HOLDING DEVICE**

(30) Priority: 26.12.2023 JP 2023219990
(71) Applicant: KUBOTA CORPORATION, Osaka-shi, Osaka 530-0011 (JP)
(72) Inventor: TERAO Motohiro, Sakai-shi, Osaka 590-0908 (JP); OHMORI Satoshi, Sakai-shi, Osaka 590-0908 (JP); SAKANO Tomoyoshi, Sakai-shi, Osaka 590-0908 (JP); SATO Ryoji, Sakai-shi, Osaka 590-0908 (JP); MIYASHITA Shunsuke, Sakai-shi, Osaka 590-0908 (JP); IKEGAMI Takanori, Sakai-shi, Osaka 590-0908 (JP); HOSODA Ryohei, Sakai-shi, Osaka 590-0908 (JP)
(74) Representative: Cabinet Beau de Loménie
(86) International application number: PCT/JP2024/044576
(87) International publication number: WO 2025/142630

(57) **Abstract**

An agricultural seedling holding device configured to appropriately and efficiently handle seedlings is to be provided.

An agricultural seedling holding device includes a pair of clamping members (310, 311) configured to clamp at least one portion of a leaf or stem of a seedling Se, and a movement mechanism (32) including a first mechanism (M1) to cause the pair of clamping members to approach each other to enable clamping of the at least one portion of the leaf or stem of the seedling, and a second mechanism (M2) to cause the pair of clamping members to move away from each other. At least one of the first mechanism or the second mechanism includes an electric actuator (30) to move at least one clamping member of the pair of clamping members.

## Description

### Technical Field

The present invention relates to agricultural seedling holding devices to handle seedlings or seedling materials including seedlings.

### Background Art

Producers who produce crop seedlings from seeds or seedlings and producers who produce crops from seedlings need to handle cultivated (grown) seedlings before or after production in the production process or the shipping process. Under such circumstances, to improve the efficiency of seedling handling operations, a seedling material, such as a seedling mat, including a plurality of seedlings grouped together, has been provided (see PTL 1).

### Citation List

### Patent Literature

PTL 1: Japanese Unexamined Patent Application Publication No. 10-113008

### Summary of Invention

### Technical Problem

However, the seedlings are still handled directly by producers (manually), and there are no apparatuses that can desirably efficiently handle the seedlings.

Accordingly, an object of the present invention is to provide an agricultural seedling holding device configure to appropriately and efficiently handle seedlings.

### Solution to Problem

An agricultural seedling holding device according to an example embodiment of the present invention includes a pair of clamping members configured to clamp at least one portion of a leaf or stem of a seedling, and a movement mechanism including a first mechanism to cause the pair of clamping members to approach each other to enable clamping of the at least one portion of the leaf or stem of the seedling, and a second mechanism to cause the pair of clamping members to move away from each other. At least one of the first mechanism or the second mechanism includes an electric actuator to move at least one clamping member of the pair of clamping members.

The first mechanism may cause the pair of clamping members to approach each other in a first direction crossing an up-down direction, and the second mechanism may cause the pair of clamping members to move away from each other in the first direction.

One of the first mechanism or the second mechanism may include the electric actuator. Another of the first mechanism or the second mechanism may include a biasing member to bias and move at least one clamping member of the pair of clamping members toward one side in the first direction.

The electric actuator may move the at least one clamping member toward another side in the first direction against biasing of the biasing member.

When the other of the first mechanism or the second mechanism moves the at least one clamping member toward the one side in the first direction by the biasing of the biasing member, the one of the first mechanism or the second mechanism may stop driving the electric actuator to allow the biasing member to move the at least one clamping member toward the one side in the first direction.

The first mechanism may include the biasing member and moves the at least one clamping member toward the one side in the first direction by a biasing force of the biasing member to cause the at least one clamping member to approach the other clamping member. The second mechanism may include the electric actuator and moves the at least one clamping member toward the other side in the first direction by driving the electric actuator to cause the at least one clamping member to move away from the other clamping member.

The agricultural seedling holding device may include a plurality of the pairs of clamping members. The movement mechanism may synchronously move the at least one clamping member of each of the plurality of pairs of clamping members in the first direction.

The electric actuator may be located higher than the pair of clamping members.

The agricultural seedling holding device may include a frame to support the movement mechanism. The frame may include an attachment portion to attach the frame to a flying object configured to fly in air.

The agricultural seedling holding device may include a sensing device to detect whether or not the seedling is between the pair of clamping members. When the sensing device detects that the seedling is between the pair of clamping members, the first mechanism may cause the pair of clamping members to approach each other and hold the seedling.

### Advantageous Effects of Invention

According to the present invention, seedlings can be appropriately and efficiently handled.

### Brief Description of Drawings

[FIG. 1] FIG. 1 is an overall perspective view of an agricultural flying apparatus including an agricultural seedling holding device according to an example embodiment of the present invention.
[FIG. 2] FIG. 2 is a plan view of the agricultural flying apparatus according to the example embodiment.
[FIG. 3] FIG. 3 is a front view of the agricultural flying apparatus according to the example embodiment.
[FIG. 4] FIG. 4 is a side view of the agricultural flying apparatus according to the example embodiment.
[FIG. 5] FIG. 5 is an exploded perspective view of the agricultural flying apparatus according to the example embodiment.
[FIG. 6] FIG. 6 is a perspective view of the agricultural seedling holding device (seedling holding device) included in the agricultural flying apparatus according to the example embodiment.
[FIG. 7] FIG. 7 is a side view of the agricultural seedling holding device (seedling holding device) included in the agricultural flying apparatus according to the example embodiment.
[FIG. 8] FIG. 8 is a plan view of the agricultural seedling holding device (seedling holding device) included in the agricultural flying apparatus according to the example embodiment.
[FIG. 9] FIG. 9 is a schematic sectional view of FIG. 8 taken along line IX-IX.
[FIG. 10] FIG. 10 is a schematic diagram illustrating a movement mechanism (second mechanism) of the agricultural seedling holding device (seedling holding device) included in the agricultural flying apparatus according to the example embodiment.
[FIG. 11] FIG. 11 is a schematic perspective view of seedlings (seedling raising mat) to be held by the agricultural seedling holding device (seedling holding device) included in the agricultural flying apparatus according to the example embodiment.
[FIG. 12] FIG. 12 is a schematic perspective view illustrating the manner of use of seedlings (seedling raising mats) to be held by the agricultural seedling holding device (seedling holding device) included in the agricultural flying apparatus according to the example embodiment.
[FIG. 13] FIG. 13 illustrates a carrying method for carrying the seedlings using the agricultural flying apparatus according to the example embodiment.
[FIG. 14] FIG. 14 illustrates a carrying method different from the carrying method illustrated in FIG. 13 for carrying the seedlings using the agricultural flying apparatus according to the example embodiment.
[FIG. 15] FIG. 15 is a front view of the agricultural flying apparatus according to the example embodiment during preparation for flight.
[FIG. 16] FIG. 16 is a front view of the agricultural flying apparatus according to the example embodiment that has reached a location above the seedlings (seedling raising mat).
[FIG. 17] FIG. 17 is a front view illustrating the arrangement of the agricultural seedling holding device (seedling holding device) included in the agricultural flying apparatus according to the example embodiment and the seedlings (seedling raising mat) to be held.
[FIG. 18] FIG. 18 is a side view illustrating the arrangement of the agricultural seedling holding device (seedling holding device) included in the agricultural flying apparatus according to the example embodiment and the seedlings (seedling raising mat) to be held.
[FIG. 19] FIG. 19 illustrates changes in the positions of skids of the agricultural flying apparatus according to the example embodiment.
[FIG. 20] FIG. 20 is a front view illustrating the manner in which the seedlings are held by the agricultural seedling holding device (seedling holding device) included in the agricultural flying apparatus according to the example embodiment.
[FIG. 21] FIG. 21 is a front view illustrating the manner in which the seedlings are lifted by causing a flying object to fly while the seedlings are held by the agricultural seedling holding device (seedling holding device) included in the agricultural flying apparatus according to the example embodiment.
[FIG. 22] FIG. 22 is a schematic sectional view of an agricultural seedling holding device according to another example embodiment of the present invention.
[FIG. 23] FIG. 23 is a schematic sectional view of an agricultural seedling holding device according to still another example embodiment of the present invention.
[FIG. 24] FIG. 24 is a front view of an agricultural flying apparatus according to still another example embodiment of the present invention.

### Description of Embodiments

Example embodiments of the present invention will now be described with reference to the drawings. In the following description, a direction orthogonal to the up-down direction is referred to as a "first direction", and a direction orthogonal to the up-down direction and the first direction is referred to as a "second direction". Accordingly, the up-down direction is referred to as a "third direction". In each figure, two orthogonal axes or three orthogonal axes are additionally illustrated to indicate the first, second, and third directions.

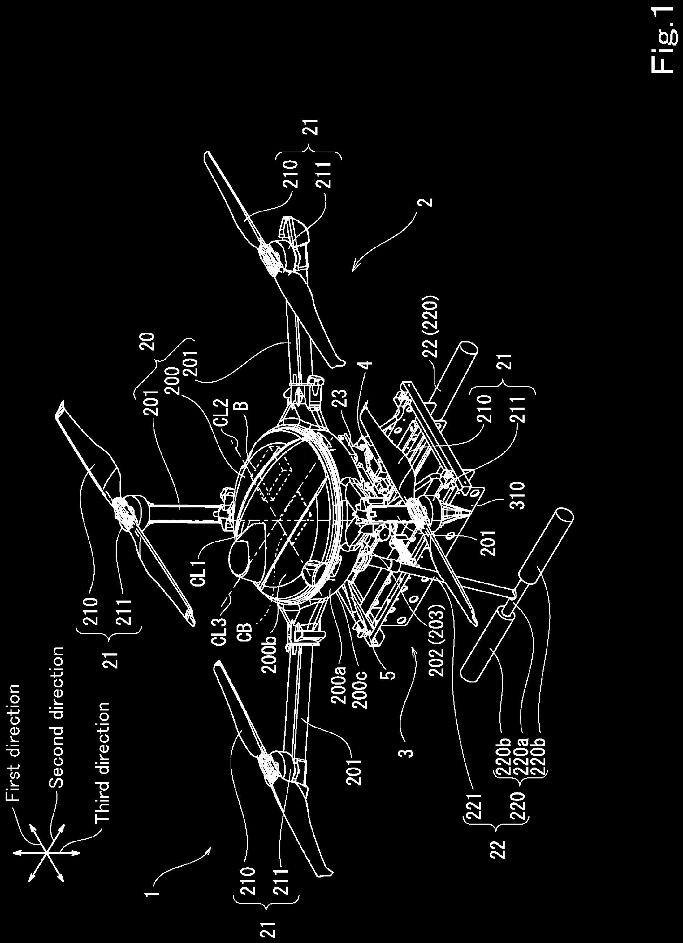

As illustrated in FIGS. 1 to 5, the agricultural flying apparatus 1 includes a flying object 2 including a body 20 and a generator 21 that generates a flight propelling force applied to the body 20; and a working device 3 that performs a predetermined function on a work target object. The agricultural flying apparatus 1 further includes a support member 5 coupled to the flying object 2 and configured to support the working device 3 below the body 20.

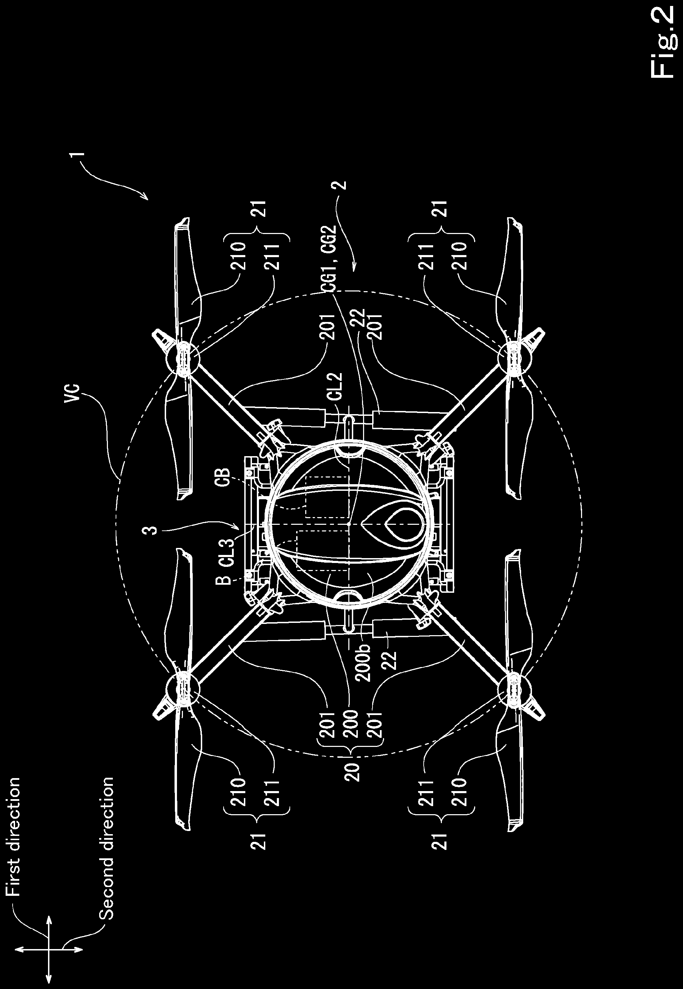

The flying object 2 of the present example embodiment includes, in addition to the body 20 and the generator 21, skids 22, each extending downward from the body 20. The flying object 2 includes a bracket 23 to which an electrical component 4 is attachable. The flying object 2 includes a battery B that stores electric power (see FIGS. 1 and 2). The flying object 2 includes electrical devices that perform control related to flight (for example, a control board CB (see FIGS. 1 and 2) that controls the generator 21, a GPS antenna, an attitude controller, and various sensors (a gyroscope sensor, an acceleration sensor, and the like)).

The body 20 includes a main body portion 200 having a predetermined three-dimensional shape and at least one support arm 201 that supports the generator 21 coupled thereto and that is connected to the main body portion 200.

The main body portion 200 is hollow and has an internal space. The main body portion 200 may have any appropriate shape (three-dimensional shape). For example, the main body portion 200 may be rectangular in plan view and have a cubic shape or a rectangular parallelepiped shape as a whole.

In the present example embodiment, the main body portion 200 has a circular (perfectly circular) shape in plan view. In other words, the main body portion 200 has a circular outer shape when viewed from the third direction.

More specifically, the main body portion 200 includes an annular peripheral wall 200a having a center line CL1 extending in the third direction (hereinafter referred to as a "vertical center line"), a top portion 200b that covers an opening at the upper end of the peripheral wall 200a in the third direction, and a bottom portion 200c that covers an opening at the lower end of the peripheral wall 200a in the third direction. In the present example embodiment, the top portion 200b bulges outward toward a central region (center of the circular shape). In other words, the top portion 200b is dome-shaped. In contrast, the bottom portion 200c is flat. Thus, the peripheral wall 200a, the top portion 200b, and the bottom portion 200c define an internal space. This internal space accommodates the battery B and the electrical devices that perform control related to flight (for example, the control board CB that controls the generator 21, a GPS antenna, an attitude controller, various sensors (a gyroscope sensor, an acceleration sensor, and the like), and a transmitter-receiver).

In the present example embodiment, coupling portions 202, 202 to which the skids 22 are coupled are provided on a lower portion of the main body portion 200. In other words, the main body portion 200 includes the coupling portions 202, 202 to which the skids 22 are coupled such that the skids 22 are rotatable about axes extending in the second direction at locations lower than an outer surface (lower surface) of the bottom portion 200c.

In the present example embodiment, the flying object 2 includes one pair of skids 22. The pair of skids 22, 22 are spaced from each other in the first direction. Accordingly, the main body portion 200 includes one pair of coupling portions 202, 202 for coupling respective ones of the pair of skids 22, 22 to the body 20.

The pair of coupling portions 202, 202 are spaced from each other in the first direction. More specifically, the pair of coupling portions 202, 202 are arranged symmetrically about an imaginary plane passing through the central position of the body 20 (main body portion 200) in the first direction (central region of the top portion 200b) and extending in the second and third directions.

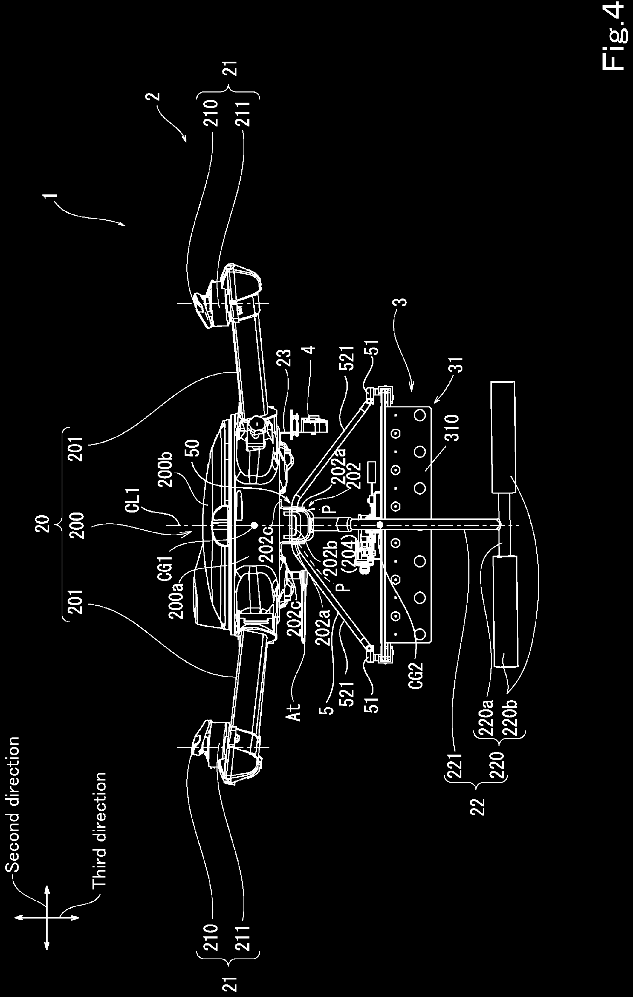

In the present example embodiment, as illustrated in FIG. 4, each of the pair of coupling portions 202, 202 includes a pair of coupling pieces 202a, 202a spaced from each other in the second direction. The pair of coupling pieces 202a, 202a have respective through holes (not numbered) extending therethrough in the second direction and arranged concentrically with each other. One of the skids 22, 22 (support leg 221 described below) is placed between the pair of coupling pieces 202a, 202a of each of the coupling portions 202, 202, and a shaft (pin) P extending in the second direction is inserted through the through holes in the pair of coupling pieces 202a, 202a and the skid 22, 22 to couple the skid 22, 22 such that the skid 22, 22 is rotatable about the shaft P.

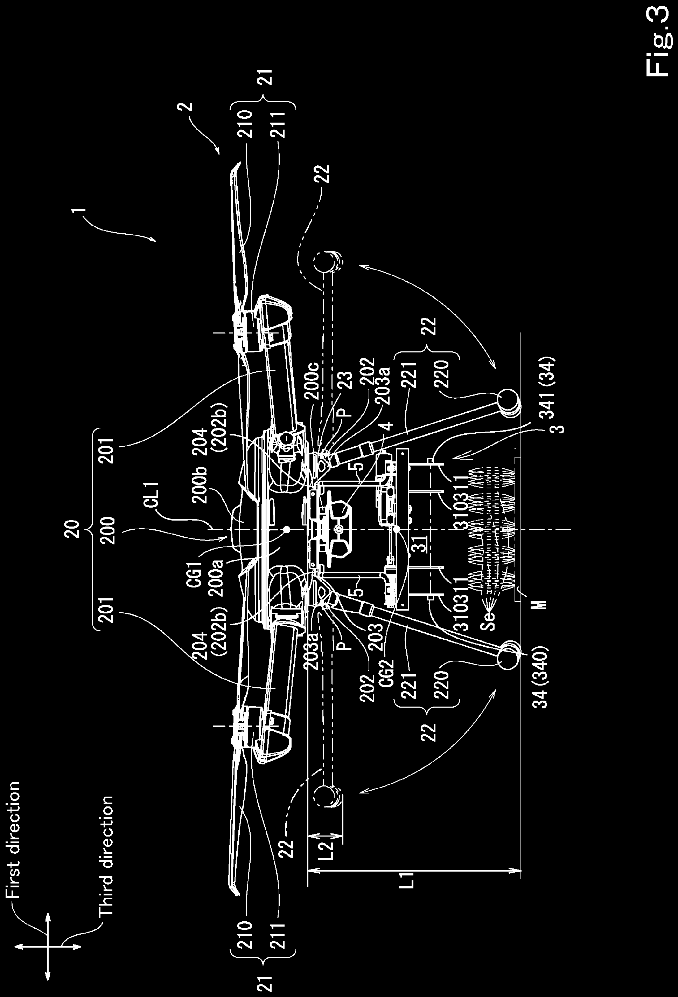

In the present example embodiment, as illustrated in FIG. 3, the body 20 includes a coupling member 203 integral with the pair of coupling portions 202, 202 spaced from each other in the first direction. The coupling member 203 is a bent plate member with both end portions in the first direction defining the coupling portions 202, 202. In other words, each of the end portions of the coupling member 203 in the first direction has through holes that extend therethrough in the second direction and through which the shaft P for coupling the skid 22 is inserted. In the present example embodiment, the coupling member 203 is integral with the pair of coupling pieces 202a, 202a of each of the coupling portions 202, 202.

More specifically, the coupling member 203 is obtained by bending, into an angular U-shape, a plate member having a predetermined developed shape large enough to include the pair of coupling portions 202, 202 at both end portions in the first direction, so that predetermined sections are cut and raised. Thus, as illustrated in FIG. 4, the pair of coupling pieces 202a, 202a stand upright facing each other in the second direction, and a connecting piece 202b connects the pair of coupling pieces 202a, 202a in the second direction.

In the coupling member 203, an upper end portion of each of the pair of coupling pieces 202a, 202a in the third direction is bent, and each of the pair of coupling pieces 202a, 202a is L-shaped when viewed from the first direction. In other words, each of the pair of coupling pieces 202a, 202a includes, at an upper end portion thereof, an attachment piece 203c projecting outward in the second direction and fixed (for example, screw-fixed) to the lower surface of the main body portion 200 (outer surface of the bottom portion 200c).

The pair of coupling pieces 202a, 202a have respective through holes (holes into which the shaft P is inserted) extending therethrough and arranged concentrically in the second direction. Thus, both end portions of the coupling member 203 in the first direction define the pair of coupling portions 202, 202. The connecting piece 202b extends in the second direction and connects the pair of coupling pieces 202a, 202a to each other. As described above, the attachment pieces 203c are fixed to the main body portion 200 (bottom portion 200c), so that the connecting piece 202b is also fixed to the main body portion 200. The coupling member 203 of the present example embodiment includes a pair of connecting pieces 202b that are spaced from each other in the first direction.

When the coupling member 203 (attachment pieces 203c) is fixed to the main body portion 200 at a predetermined location, the pair of connecting pieces 202b are spaced from each other in the first direction and arranged symmetrically about an imaginary plane extending in the second and third directions along the vertical center line CL1. Accordingly, each of the pair of connecting pieces 202b not only connects (couples) the pair of coupling pieces 202a, 202a (pair of coupling pieces 202a, 202a) to each other, but also defines an attachment portion 204 for attaching a corresponding one of a pair of stays 5, 5 described below that define the support member 5. In other words, the body 20 includes a pair of attachment portions 204 for attaching the pair of stays 5, 5 to the lower surface of the main body portion 200. Since the coupling member 203 is made of metal, the pair of attachment portions 204 are also made of metal. Accordingly, the stays 5, 5 are securely fixed to the pair of attachment portions 204 by threaded members.

In the present example embodiment, the agricultural flying apparatus 1 includes the pair of stays 5, 5 as the support member 5. As illustrated in FIG. 3, the pair of attachment portions 204 (connecting pieces 202b) are located inward (toward the vertical center line CL1) of the pair of coupling portions 202, 202. Accordingly, the pair of stays 5, 5 attached to the pair of attachment portions 204 are located between the pair of skids 22, 22 connected to the pair of coupling portions 202, 202.

As illustrated in FIG. 1, the support arms 201 extend straight from the main body portion 200 in directions intersecting the vertical center line CL1. More specifically, the body 20 of the present example embodiment includes the support arms 201 that extend from the peripheral wall 200a of the main body portion 200 in directions intersecting the third direction and are arranged radially about the central region of the top portion 200b of the main body portion 200 when viewed from the third direction. Each support arm 201 includes a proximal end portion connected to the peripheral wall 200a and a distal end portion opposite to the proximal end portion in the direction in which the support arm 201 extends from the peripheral wall 200a. Each support arm 201 is hollow and has an internal space extending from the distal end portion to the proximal end portion. Accordingly, the peripheral wall 200a of the main body portion 200 has openings through which the internal space of the main body portion 200 communicates with the internal spaces of the support arms 201. As described above, in the present example embodiment, the battery B is accommodated in the main body portion 200. However, for example, the battery B may be accommodated in each of the internal spaces to increase the power capacity.

As illustrated in FIG. 2, the support arms 201 are arranged at equal intervals around the vertical center line CL1. In the present example embodiment, the body 20 includes four support arms 201. Accordingly, each of the four support arms 201 is located between a center line CL2 (hereinafter referred to as a "first horizontal center line") orthogonal to the vertical center line CL1 and extending in the first direction and a center line CL3 (hereinafter referred to as a "second horizontal center line") orthogonal to the vertical center line CL1 and the first horizontal center line CL2. In other words, each of the four support arms 201 is at an angle of 45° with respect to the first horizontal center line CL2 or the second horizontal center line CL3.

As illustrated in FIGS. 3 and 4, the proximal end portions of the support arms 201 are at the same height (position) in the third direction. In other words, the proximal end portions of the support arms 201 are on the same imaginary plane orthogonal to the vertical center line CL1. Additionally, the distal end portions of the support arms 201 are on the same imaginary plane orthogonal to the vertical center line CL1.

In the present example embodiment, the distal end portions of the support arms 201 are located higher than the proximal end portions of the support arms 201 in the third direction. In other words, the support arms 201 are inclined outward and upward. As illustrated in FIG. 2, the distal end portions of the support arms 201 are on the same imaginary circle VC (imaginary perfect circle) centered on a central region (center) of the top portion 200b when viewed from the third direction. More specifically, an electric motor 211 of a rotary wing device described below, which defines the generator 21, is fixed to the distal end portion of each of the support arms 201. Output shafts of the electric motors 211 project upward. Accordingly, the electric motors 211 are attached to the distal end portions of the support arms 201 at locations such that the centers of the output shafts of the electric motors 211 are on the same imaginary circle VC (imaginary perfect circle) centered on the central portion (center) of the main body portion 200 (top portion 200b) when viewed from the third direction.

The generator 21 is connected to the body 20. In the present example embodiment, the generator 21 is a rotary wing device that applies a flight propelling force to the body 20. The rotary wing device is driven by electric power from the battery B. More specifically, the rotary wing device includes at least one propeller 210 that rotates about a predetermined axis, and at least one electric motor 211 that receives electric power supplied from the battery B and rotationally drives the propeller 210.

The rotary wing device includes a plurality of propellers 210 arranged around the body 20. Accordingly, the rotary wing device includes a plurality of electric motors 211, the number of which corresponds to the number of propellers 210. In other words, the flying object 2 of the present example embodiment is a multicopter configured to perform unmanned flight by using the propellers 210, and is referred to as, for example, a drone.

In the present example embodiment, the rotary wing device includes four propellers 210 and four electric motors 211 corresponding to the four propellers 210. More specifically, the four electric motors 211 are fixed to the distal end portions of respective ones of the four support arms 201. In the present example embodiment, since the body 20 includes four support arms 201, four electric motors 211 are provided in correspondence with the number of distal end portions of the support arms 201, and four propellers 210 are provided to be driven by the electric motors 211. Each of the four propellers 210 is located higher than the working device 3 (holding device 31 described below).

In the present example embodiment, each of the electric motors 211 (four electric motors 211) is a direct current (DC) motor, and receives electric power supplied from the battery B accommodated in the main body portion 200. In other words, each of the electric motors 211 is electrically connected to the battery B in the main body portion 200 by an electric power line (electric wire) inserted through the corresponding support arm 201.

The propellers 210 are fixed to the output shafts of the electric motors 211. The electric motors 211 are fixed to the support arms 201 (distal end portions) such that the axes of the output shafts extend in the third direction and that the output shafts project upward. Accordingly, the propellers 210 fixed to the output shafts of the electric motors 211 rotate about the output shafts of the electric motors 211 (axes extending in the third direction). Additionally, as described above, the centers of the output shafts of the electric motors 211 are on the imaginary circle VC (imaginary perfect circle) centered on the central region of the main body portion 200 in plan view (when viewed from the third direction). Therefore, the centers of rotation of the propellers 210 (four propellers 210) are also on the imaginary circle VC (imaginary perfect circle).

The four propellers 210 and the four electric motors 211 are arranged in the same manner with respect to the corresponding support arms 201. In the illustrated flying object 2, each of the propellers 210 is a two-blade propeller in which two blades symmetrically extend from a central portion including the center of rotation. However, each propeller 210 may be a propeller in which a plurality of blades extending from the central portion including the center of rotation are arranged at equal intervals around the center of rotation (for example, a threeblade propeller or a four-blade propeller).

Since the number of propellers 210 included in the rotary wing device (generator 21) of the present example embodiment is four (even number), the electric motors 211 are driven such that the propellers 210 adjacent to each other in the circumferential direction of the imaginary circle VC rotate in opposite directions. Thus, the rotary wing device (generator 21) generates a flight propelling force (lift) for the flight of the body 20 by rotating each of the propellers 210.

When the flying object 2 (multicopter) lands (touches down), the pair of skids 22, 22 come into contact with the ground to support the body 20 above the ground. Accordingly, each of the pair of skids 22, 22 includes a ground contact portion 220 at a lower end portion thereof.

More specifically, as illustrated in FIGS. 3 and 4, each of the pair of skids 22, 22 includes a support leg 221 coupled to the body 20 (main body portion 200), and the ground contact portion 220 coupled to the support leg 221.

The support leg 221 extends in one direction, and includes a first end portion and a second end portion at opposite ends in the first direction. The first end portion of the support leg 221 is coupled to the body 20. In other words, the first end portion of the support leg 221 is coupled to a corresponding one of the coupling portions 202, 202 located below the main body portion 200. In contrast, the second end portion of the support leg 221 is coupled to the ground contact portion 220. The ground contact portion 220 extends in the second direction. The second end portion of the support leg 221 is coupled to a central portion of the ground contact portion 220 in the second direction. The ground contact portion 220 includes a shaft portion 220a having rigidity and connected to the support leg 221, and cushioning portions 220b externally fitted to the shaft portion 220a. The cushioning portions 220b are provided on the shaft portion at locations on both sides of a central portion of the support leg 221 (see FIG. 4).

As illustrated in FIG. 3, at least an interval between the lower end portions (ground contact portions 220) of the pair of skids 22, 22 in the first direction is wider than a seedling raising mat M. In the present example embodiment, the pair of skids 22, 22 (support legs 221) are arranged such that the interval therebetween in the first direction increases with increasing distance downward from the body 20. In other words, the pair of skids 22, 22 are arranged so as to spread outward when viewed from the second direction.

In the present example embodiment, the distance in the up-down direction from a downwardly facing outer surface (hereinafter simply referred to as a "lower surface") of the body 20 (main body portion 200) to the lower end portions (ground contact portions 220) of the pair of skids 22, 22 is changeable.

In the present example embodiment, as illustrated in FIG. 3, the upper end portions of the pair of skids 22, 22 (first end portions of the support legs 221) are coupled to the coupling portions 202 of the body 20 such that the pair of skids 22, 22 are rotatable about the axes (shafts P) extending in the second direction. Accordingly, the distance L1 to L2 in the third direction from the body 20 (lower surface of the main body portion 200) to the lower end portions of the pair of skids 22, 22 is changeable by rotating the pair of skids 22, 22 around the axes (shafts P) from the state in which the pair of skids 22, 22 extend downward from the body 20. In other words, the height of the body 20 from the ground surface when the ground contact portions 220 are in contact with the ground surface is changeable. In the present example embodiment, the ground contact portions 220 are capable of being located higher than the seedling holding device 3. In other words, while the flying object 2 is flying (for example, hovering), the seedling holding device 3 is capable of approaching the ground (at least one seedling Se or a seedling material M on the ground) without causing the skids 22 to interfere therewith.

Each of the pair of skids 22, 22 may be rotatable about an axis extending in the second direction at the first end portion of the support leg 221 such that each of the pair of skids 22, 22 is capable of maintaining the position thereof at any rotation angle, or at any of a plurality of preset rotation angles. In other words, each of the pair of skids 22, 22 may be fixable (non-rotatably retainable) at any angle, or be fixable (non-rotatably retainable) at any of a plurality of preset rotation angles. Examples of means for fixing (maintaining the positions of) the skids 22, 22 include fixing bolts that stop the rotation of the skids 22, 22 physically (for example, by frictional resistance or mechanical engagement), ratchet mechanisms capable of retaining the skids 22, 22 in multiple positions, and ball lock mechanisms.

The bracket 23 projects downward from the lower surface of the body 20. More specifically, the bracket 23 is attached to the lower surface of the body 20 (outer surface of the bottom portion 200c) at one end portion of the body 20 in the second direction, and extends downward in the third direction. As illustrated in FIG. 4, in the present example embodiment, the electrical component 4 is attached to a lower end portion of the bracket 23. The bracket 23 and the electrical component 4 are coupled to each other by an externally threaded member. Accordingly, the bracket 23 has a hole through which the externally threaded member for fixing the electrical component 4 is inserted. In the present example embodiment, the holding device 31 is located below and spaced from the body 20. To allow the electrical component 4 to be located between the body 20 and the holding device 31 arranged in the up-down direction, the bracket 23 is also located between the body 20 and the holding device 31 arranged in the up-down direction. Assuming that the electrical component 4 is provided on one surface of the bracket, the bracket 23 is located such that the lower end thereof does not reach the holding device 31, thus providing an arrangement space for the electrical component 4 to be attached.

The electrical component 4 is operated by electric power supplied from the battery B. In the present example embodiment, the electrical component 4 is an imaging device (camera). Since the bracket 23 is located as described above, the imaging device is attachable to the bracket 23 at a location between the pair of stays 5, 5 such that an imaging direction of the imaging device is the second direction. The electrical component 4 is an imaging device (camera) in the present example embodiment, but may instead be, for example, a distance sensor. Also in this case, the bracket 23 may be configured to allow the distance sensor to be attached thereto at a location between the pair of stays 5, 5 such that a measurement direction of the distance sensor is the second direction. Thus, a distance can be appropriately measured without interference by the stays 5, 5 and the skids 22, 22, and the measurement result can be utilized for the flight of the flying object 2.

In the present example embodiment, an antenna At connected to a transmitter-receiver in the body 20 by a coaxial cable is attached to the other end portion of the lower surface (bottom portion 200c) of the body 20 in the second direction. Accordingly, in addition to the electrical component 4, the antenna At is also located between the pair of stays 5, 5 and between the body 20 and the lower end portions of the skids 22 (see FIG. 4).

The flying object 2 is configured as described above, and includes the rotary wing device including the propellers 210 as the generator 21. Since electrical devices (in particular, a transmitter-receiver or the like) are installed in the body 20 (main body portion 200), the flying object 2 is configured to fly by remote operation through wireless or wired communication. The flying object 2 is not limited to those configured to fly by remote operation through wireless or wired communication, and may perform fully automatic flight by autonomous control.

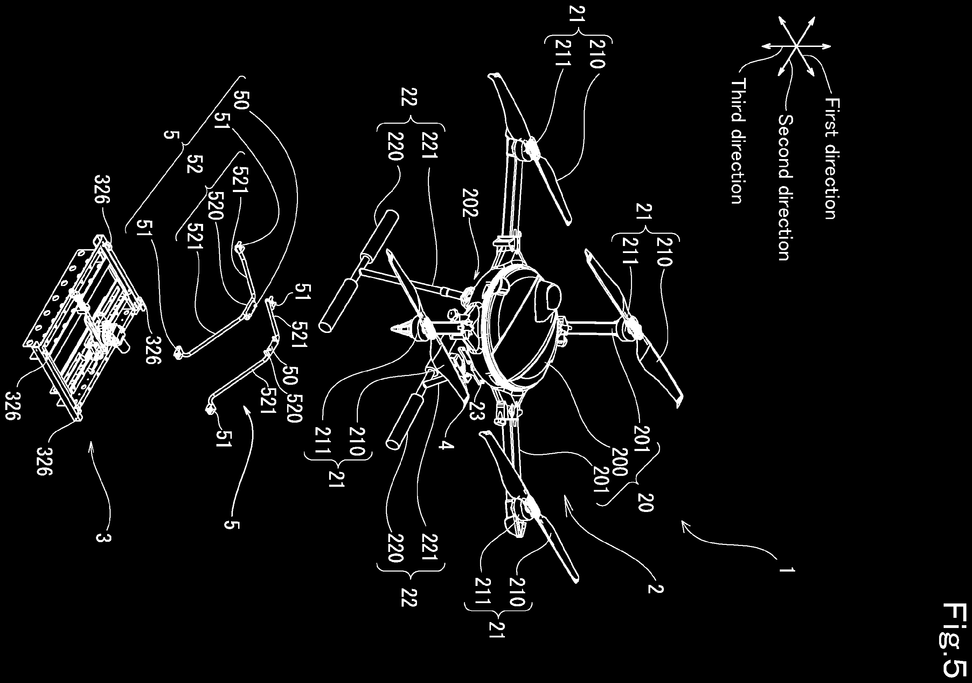

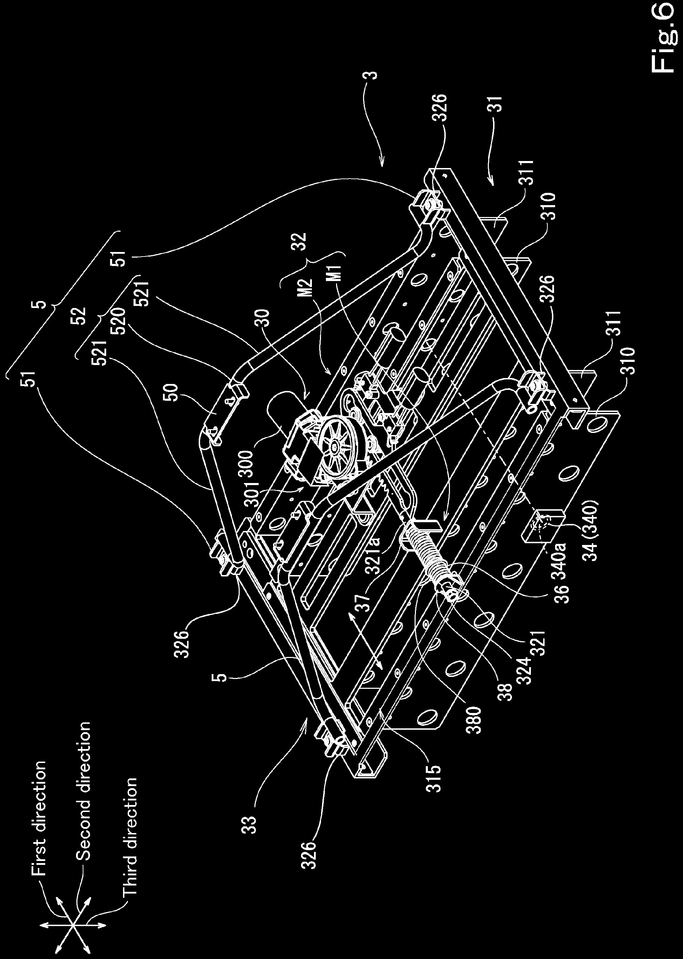

The support member 5 is configured to support the working device 3 (agricultural seedling holding device 3) at a plurality of positions. More specifically, as illustrated in FIGS. 4 and 5, the agricultural flying apparatus 1 of the present example embodiment includes the pair of stays 5, 5, which define the support member 5, as described above. The support member 5 couples the flying object 2 and the agricultural seedling holding device 3 (holding device 31), which is the working device 3, to each other. In other words, the agricultural flying apparatus 1 includes the pair of stays 5, 5 spaced from each other in the first direction and coupling the flying object 2 and the working device 3 (holding device 31) to each other. Further, as illustrated in FIG. 6, the agricultural flying apparatus 1 includes a sensing device 34 that detects a work target object. In the present example embodiment, the pair of stays 5, 5 and the sensing device 34 are fixed to the agricultural seedling holding device 3. In other words, the pair of stays 5, 5 and the sensing device 34 are included in the agricultural seedling holding device 3, and the agricultural seedling holding device 3 is detachable from the flying object 2 by detaching the pair of stays 5, 5 from the body 20 (attachment portions).

As illustrated in FIGS. 2 to 4, the centers of gravity CG1, CG2 of the body 20 and the holding device 31, respectively, coincide with or substantially coincide with each other when viewed from the third direction. In other words, the pair of stays 5, 5 couple the body 20 and the agricultural seedling holding device 3 to each other such that the center of gravity CG1, CG2 of the body 20 and the center of gravity CG1, CG2 of the agricultural seedling holding device 3 coincide with or substantially coincide with each other when viewed from the third direction.

As illustrated in FIGS. 5 and 6, each of the stays 5, 5 includes a first coupling portion 50, 50 coupled to the body 20 of the flying object 2; a pair of inclined sections 521, 521 extending from both ends of the first coupling portion 50, 50 in the second direction and inclined downward in the third direction toward distal ends thereof; and a pair of second coupling portions 51, 51 fixed to distal end portions of respective ones of the pair of inclined sections 521, 521, each of the pair of second coupling portions 51, 51 being coupled to the agricultural seedling holding device 3 (frame 33 described below).

More specifically, in the present example embodiment, each of the pair of stays 5, 5 includes the first coupling portion 50 coupled to the body 20 of the flying object 2, the second coupling portions 51, 51 coupled to the agricultural seedling holding device 3 (frame 33 described below), and a stay body 52 that connects the second coupling portions 51, 51 to the first coupling portion 50.

In each of the pair of stays 5, 5, the first coupling portion 50 is located higher than the second coupling portions 51, 51. In other words, the second coupling portions 51, 51 are located lower than the first coupling portion 50.

In the present example embodiment, each of the pair of stays 5, 5 includes the pair of (two) second coupling portions 51, 51. The pair of second coupling portions 51, 51 are spaced from each other in the second direction. Accordingly, the first coupling portion 50 is located higher than the second coupling portions 51, 51 by a predetermined distance in the third direction so as to correspond to an intermediate location between the two second coupling portions 51, 51. Each of the first coupling portion 50 and the pair of second coupling portions 51, 51 is a metal fitting. The first coupling portion 50 is coupled, by externally threaded members, to the corresponding attachment portion 204 of the coupling member 203 attached to the body 20 (main body portion 200) of the flying object 2. In contrast, the pair of second coupling portions 51, 51 are coupled, by externally threaded members, to the frame 33 of the agricultural seedling holding device 3.

The stay body 52 is a metal rod member that is bent. The stay body 52 includes a straight section 520 to which the first coupling portion 50 is fixed and that extends in the second direction; and the pair of inclined sections 521, 521 that extend from both ends of the straight section 520 and to which the second coupling portions 51, 51 are fixed at the distal end portions thereof. The pair of inclined sections 521, 521 extend in the second direction when viewed from the third direction and are inclined downward in the third direction with increasing distance from the straight section 520.

The first coupling portion 50 is coupled to the straight section 520, and the second coupling portions 51, 51 are coupled to the distal ends of the pair of inclined sections 521, 521. The pair of inclined sections 521, 521 have the same length and the same inclination angle, and are arranged symmetrically about an imaginary plane passing through the central region of the straight section 520 in the second direction. The inclination angle of the pair of inclined sections 521, 521 relative to the straight section 520 is set in relation to the overall length of the inclined sections 521, 521 such that the linear distance, in the third direction, between each of the second coupling portions 51, 51 and the first coupling portion 50 (location corresponding to the first coupling portion 50 to be precise) is equal to a predetermined distance. In other words, the inclination angle of the pair of inclined sections 521, 521 relative to the straight section 520 is set such that the distance from the lower surface of the body 20 to the upper surface of the agricultural seedling holding device 3 (frame 33) is equal to a predetermined distance. Accordingly, the distance between the pair of inclined sections 521, 521 in the second direction increases with increasing distance from the flying object 2 toward the seedling holding device 3.

The distal end portions (portions to which the second coupling portions 51, 51 are coupled) of the pair of inclined sections 521, 521 are bent outward in the first direction. Each of the pair of stays 5, 5 is located such that the straight section 520 and the pair of inclined sections 521, 521 extend along imaginary planes extending in the second direction and the third direction when a corresponding one of the second coupling portions 51, 51 is coupled to the body 20 and two corresponding ones of the first coupling portions 50 are coupled to the frame 33 of the agricultural seedling holding device 3. In other words, the attachment portions 204 of the flying object 2 (support arms 201 of the coupling member 203) and coupling portions of the frame 33 of the agricultural seedling holding device 3 to which the first coupling portions 50 are coupled are arranged such that the pair of inclined sections 521, 521 stand upright (extend in the third direction) when viewed from the second direction.

In the present example embodiment, the body 20 and the agricultural seedling holding device 3 are coupled to each other by the pair of stays 5, 5 such that the center of gravity CG1, CG2 of the body 20 and the center of gravity CG1, CG2 of the agricultural seedling holding device 3 coincide with or substantially coincide with each other when viewed from the third direction.

The pair of stays 5, 5 are coupled to the body 20 (main body portion 200) such that the pair of stays 5, 5 are spaced from each other in the first direction. More specifically, the pair of stays 5, 5 are coupled to the body 20 (main body portion 200) with the bracket 23 of the flying object 2 interposed therebetween. Accordingly, the bracket 23 is located between the pair of stays 5, 5. Since the four second coupling portions 51 of the support member 5 (pair of stays 5, 5) are coupled to the seedling holding device (working device) 3 as described above, the seedling holding device (working device) 3 is supported at a plurality of locations (four locations). Accordingly, the seedling holding device (working device) 3 is rigidly coupled to the body 20 so that the seedling holding device (working device) 3 does not swing during flight.

The working device 3 performs a predetermined function on a work target object located therebelow while the agricultural flying apparatus 1 (flying object 2) is flying. More specifically, the working device 3 is an apparatus for agricultural work (apparatus that performs agricultural work). As illustrated in FIGS. 1 to 5, the working device 3 is located below the body 20 of the flying object 2. The working device 3 is located below and spaced from the body 20.

As illustrated in FIG. 6, the working device 3 includes an electric actuator 30 to perform a predetermined function. The electric actuator 30 is operated by electric power supplied from the battery B. In the present example embodiment, the electric actuator 30 receives electric power from the battery B of the flying object 2.

The working device 3 may be a device that performs various types of work, for example, at least one of cultivation, seeding, and mowing. In the present example embodiment, the working device 3 is a seedling holding device 3 (agricultural seedling holding device 3) that handles seedlings Se. Accordingly, the working device 3 includes a holding device 31 configured to hold a seedling Se or a seedling Se on a seedling material M including the seedling Se.

More specifically, the seedling holding device 3 according to the present example embodiment includes at least one pair of clamping members 310, 311 configured to clamp a leaf or stem of a seedling; and a movement mechanism 32 including a first mechanism M1 to cause the pair of clamping members 310, 311 to approach each other to enable clamping of the leaf or stem of the seedling, and a second mechanism M2 to cause the pair of clamping members to move away from each other.

The movement mechanism 32 operates the first mechanism M1 and the second mechanism M2 to switch between a first state in which the pair of clamping members 310, 311 is configured to clamp and holding the seedling Se or the seedling Se on the seedling material M including the seedling Se, and a second state in which the first state is canceled.

In other words, the seedling holding device 3 includes the holding device 31 switchable between the first state in which the seedling holding device 3 is configured to hold the seedling Se or the seedling Se on the seedling material M including the seedling Se, and the second state in which the first state is canceled; and a driving device 32 that switches the holding device 31 between the first state and the second state. The seedling holding device 3 includes the frame 33 that supports the holding device 31 and the driving device 32. The seedling holding device 3 includes the sensing device 34 that detects whether or not the seedling Se or the seedling Se on the seedling material M is between the pair of clamping members 310, 311.

As illustrated in FIGS. 3 and 4, the holding device 31 is located below (directly below) the body 20 of the flying object 2. Accordingly, the at least one propeller 210 (propellers 210) of the flying object 2 is located higher than the holding device 31. More specifically, the holding device 31 is disposed between the body 20 and the lower end portions (ground contact portions 220) of the pair of skids 22, 22. Additionally, the holding device 31 is located between the pair of skids 22, 22. In the present example embodiment, the entirety of the seedling holding device 3 including the holding device 31 is located between the body 20 and the lower end portions of the pair of skids 22, 22. Additionally, the entirety of the seedling holding device 3 including the holding device 31 is located between the pair of skids 22, 22. Accordingly, the interval between the pair of skids 22, 22 in the first direction is set such that the seedling Se (in the present example embodiment, the seedling raising mat M) held by the seedling holding device 3 can be disposed between the pair of skids 22, 22.

Additionally, as illustrated in FIG. 2, the holding device 31 is located closer to the body 20 than the centers of rotation of the propellers 210. In other words, the entirety of the seedling holding device 3 including the holding device 31 is located closer to the body 20 than the centers of rotation of the plurality of propellers 210.

More specifically, as described above, the centers of rotation of the propellers 210 included in the generator 21 (rotary wing device) of the flying object 2 (output shafts of the electric motors 211) are on the circumference of the imaginary circle (imaginary perfect circle) VC centered on the central portion of the body 20 (main body portion 200). The holding device 31 (in the present example embodiment, the entirety of the seedling holding device 3 including the holding device 31) is located within the imaginary circle (imaginary perfect circle) VC when viewed from the third direction.

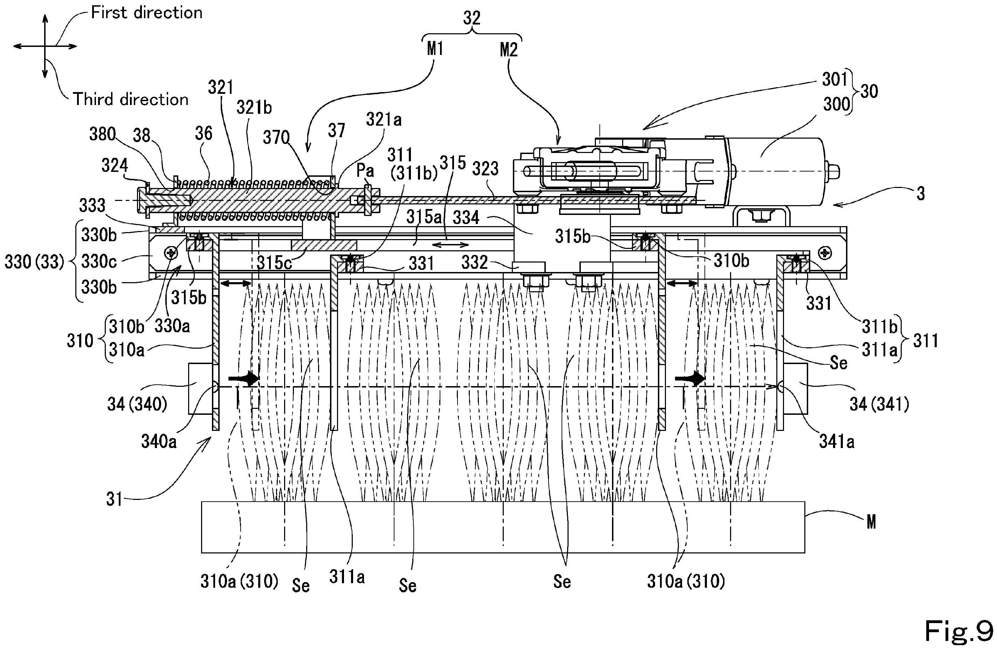

As illustrated in FIG. 9, the holding device 31 is configured to hold the seedling Se (a leaf or stem above the root of the seedling Se) included in the seedling raising mat M defining a seedling material including the seedlings Se. In the present example embodiment, the holding device 31 holds a plurality of seedlings Se included in the seedling raising mat M. More specifically, among the seedlings Se arranged in a grid pattern (matrix pattern) on the seedling raising mat M, the holding device 31 holds the seedlings Se arranged along at least one row.

Among the seedlings Se arranged in a grid pattern (matrix pattern) on the seedling raising mat M, the holding device 31 of the present example embodiment holds the seedlings Se aligned in at least one predetermined row. More specifically, among the seedlings Se in a plurality of rows arranged at equal intervals or substantially equal intervals in the first direction, the holding device 31 of the present example embodiment holds the seedlings Se arranged in two rows spaced from each other in the first direction and in each of which the seedlings Se are aligned in the second direction.

More specifically, the holding device 31 includes the pair of clamping members 310, 311 that are movable relative to each other in the first direction and switchable between the first state and the second state. The driving device (movement mechanism) 32 operates to switch the pair of clamping members 310, 311 of the holding device 31 between the first state and the second state. As described above, the first state is a state in which the pair of clamping members 310, 311 are close to each other and configured to clamp the seedlings Se or the seedlings Se on the seedling material M therebetween. In contrast, the second state is a state in which the clamping force by which the pair of clamping members 310, 311 clamp the seedlings Se therebetween (pressing force applied to the seedlings Se or the like) is released. In the present example embodiment, the second state is a state in which the pair of clamping members 310, 311 are separated from each other (state in which at least one clamping member 310 is separated from the seedlings Se or the seedlings Se on the seedling material M to be held).

The pair of clamping members 310, 311 are holding members that hold the seedlings Se such that the seedlings Se are clamped therebetween. As illustrated in FIGS. 6 to 8, each of the pair of clamping members 310, 311 extends in the second direction. Each of the pair of clamping members 310, 311 is a plate-shaped member that is upright in the third direction, has a thickness in the first direction (thickness direction is the first direction), and extends in the second direction. Accordingly, the pair of clamping members 310, 311 have flat surfaces facing each other in the first direction.

More specifically, as illustrated in FIG. 9, the pair of clamping members 310, 311 include clamping portions 310a, 311a that clamp the seedlings Se and that have clamping surfaces extending in the second direction and the third direction; and fixing tabs 310b, 311b that are connected to upper end portions (upper ends) of the clamping portions 310a, 311a in the third direction and extend from the clamping portions 310a, 311a in the first direction. The pair of clamping members 310, 311 are formed by bending metal plates, and the fixing tabs 310b, 311b are bent relative to the clamping portions 310a, 311a. In other words, each of the pair of clamping members 310, 311 is vertically inverted L-shaped when viewed from the second direction. Screws for fixing the fixing tabs 310b, 311b to coupling (fixation) targets are inserted through the fixing tabs 310b, 311b. In other words, each of the fixing tabs 310b, 311b has a plurality of holes that are spaced from each other in the second direction and through which the screws are inserted.

The holding device 31 includes a plurality of pairs of clamping members 310, 311. In the present example embodiment, the holding device 31 includes two pairs of clamping members 310, 311. The clamping members 310, 311 of each pair are arranged such that the clamping portions 310a, 311a (clamping surfaces) thereof face each other in the first direction. The pairs of clamping members 310, 311 are arranged in the first direction. The clamping members 310 of the respective pairs have the same configuration, and the clamping members 311 of the respective pairs have the same configuration.

In the present example embodiment, in each pair of clamping members 310, 311, one clamping member 310 is movable in the first direction, and the other clamping member 311 is fixed at a fixed position. More specifically, the other clamping member 311 is fixed to the frame 33, and the one clamping member 310 is movable in the first direction. In the present example embodiment, the clamping members 310 of the respective pairs move synchronously in the same direction. In other words, the clamping members 310 of the respective pairs are coupled to a reciprocating body 315, described below, of the movement mechanism 32, and move synchronously when the reciprocating body 315 moves in the first direction.

As described above, the movement mechanism 32 moves one clamping member 310 of each pair of clamping members 310, 311 in the first direction to switch between the first state and the second state. Accordingly, in the present example embodiment, the driving device 32 that changes the state of the holding device 31 defines a movement mechanism. Thus, in the following description, the driving device 32 will be described as a movement mechanism.

The movement mechanism 32 is located above the holding device 31. The movement mechanism 32 includes a biasing member 36 that applies a biasing force to the one clamping member 310 to move the one clamping member 310 toward one side in the first direction. The movement mechanism 32 also includes an electric actuator 30 that moves the one clamping member 310 toward the other side in the first direction against the biasing of the biasing member 36. In this seedling holding device 3, the second mechanism M2 stops driving the electric actuator 30 and allows the biasing member 36 to move the one clamping member 310 in the first direction. In the present example embodiment, when the sensing device 34 detects the seedlings Se or the seedlings Se on the seedling material M between the pair of clamping members 310, 311, the movement mechanism 32 allows the biasing member 36 to move the one clamping member 310 in the first direction.

Accordingly, the movement mechanism 32 switches to one of the first state and the second state by causing the first mechanism (biasing force of the biasing member 36) to move the one clamping member 310 in the first direction, and switches to the other of the first state and the second state by causing the second mechanism (driving of the electric actuator 30) to move the one clamping member 310 in the first direction.

More specifically, the movement mechanism 32 includes the first mechanism M1 that includes the biasing member 36 and causes the one clamping member 310 to approach the other clamping member 311 by the biasing force of the biasing member 36; and the second mechanism M2 that includes the electric actuator 30 and causes the one clamping member 310 to move away from the other clamping member 311 against the biasing force of the biasing member 36. In the present example embodiment, the first mechanism M1 and the second mechanism M2 are operatively coupled to each other and operate in conjunction with each other. In other words, the seedling holding device 3 includes the reciprocating body 315 as a component shared by the first mechanism M1 and the second mechanism M2. The reciprocating body 315 is configured to reciprocate in the first direction while being guided by the frame 33, and the one clamping member 310 is directly or indirectly coupled to the reciprocating body 315. In other words, the movement mechanism 32 includes the reciprocating body 315 to which the one clamping member 310 is directly or indirectly coupled and that is configured to reciprocate in the first direction.

In the first mechanism M1, a compression coil spring is used as the biasing member 36. The compression coil spring 36 is compressible in the first direction. The compression coil spring 36 is located between a first spring receiver 37 fixed to the reciprocating body 315 and a second spring receiver 38 facing the first spring receiver 37 in the first direction and fixed to the frame 33. Accordingly, the compression coil spring 36 biases the first spring receiver 37 toward one side in the first direction to move the reciprocating body 315, to which the first spring receiver 37 is fixed, toward the one side in the first direction (in a direction toward the other clamping member 311). Accordingly, the biasing member 36 also moves the one clamping member 310 attached to the reciprocating body 315 toward the one side in the first direction. The first mechanism M1 includes a shaft body 321 that transmits, to the reciprocating body 315, the biasing force of the compression coil spring 36 and the biasing force toward the other side in the first direction generated by driving of the electric actuator 30 of the second mechanism M2.

The shaft body 321 is inserted (internally inserted) through the compression coil spring 36, and extends through the first spring receiver 37 and the second spring receiver 38 such that the shaft body 321 is movable in the first direction. Accordingly, the first spring receiver 37 and the second spring receiver 38 have through holes 370, 380 that extend therethrough in the first direction and through which the shaft body 321 is inserted.

As described above, a plate-shaped rack 323 is coupled to one end portion of the shaft body 321. Accordingly, the end portion of the shaft portion has a groove in which the plate-shaped rack 323 is insertable and that extends in an axial direction and opens at one end surface. Additionally, the end portion of the shaft body 321 has a pin insertion hole extending therethrough in a radial direction, in which a coupling pin Pa for coupling the shaft body 321 with the rack 323 is inserted (press-fitted). Accordingly, one end portion of the rack 323 also has a hole extending therethrough in the thickness direction, in which the coupling pin Pa is inserted (press-fitted). Thus, the end portion of the rack 323 is inserted into the groove, and the coupling pin Pa is inserted into the pin insertion hole in the shaft body 321 and the hole in the rack 323 such that the coupling pin Pa extends through the shaft body 321 and the rack 323.

The shaft body 321 includes a flange portion 321b projecting radially outward on an outer periphery of the shaft body 321 at one end thereof. More specifically, the shaft body 321 includes a main shaft portion 321a inserted through the through holes 370, 380 in the first spring receiver 37 and the second spring receiver 38, and the flange portion 321b projecting from the outer periphery of the main shaft portion 321a.

The main shaft portion 321a is a main section of the shaft body 321, and the length thereof in the first direction is equal to the length of the shaft body 321. Additionally, the main shaft portion 321a has a constant (uniform) outer diameter over the entire length thereof. The main shaft portion 321a has the groove and the pin insertion hole. The flange portion 321b is provided on one end portion or at one end of the main shaft portion 321a, and is closer to the other end than the groove and the pin insertion hole. The flange portion 321b has an outer diameter greater than the diameter of the through hole in the first spring receiver 37. In other words, the flange portion 321b has an outer diameter such as to cause the flange portion 321b to interfere (bring it into contact) with the first spring receiver 37 on a side adjacent to the rack 323 in the first direction.

Provided that the rack 323 coupled to the main shaft portion 321a remains meshed with the pinion gear 322, the main shaft portion 321a is inserted into the through hole 370 in the first spring receiver 37 from the other end of the main shaft portion 321a. Additionally, provided that the rack 323 coupled to the main shaft portion 321a remains meshed with the pinion gear 322, the main shaft portion 321a is also inserted into the through hole in the second spring receiver 38 described below. In this state, the length of the main shaft portion 321a is set such that the other end of the main shaft portion 321a projects from the second spring receiver 38.

More specifically, an annular retaining member 324 having a diameter greater than that of the through hole in the second spring receiver 38 is screw-fixed to the other end of the main shaft portion 321a projecting outward beyond the second spring receiver 38. In this state, the length (distance) from the flange portion 321b of the main shaft portion 321a to the other end surface (retaining member 324) in the first direction is set to a length (distance) greater than or equal to the sum of the length in the first direction of the compression coil spring 36 in an extended state between the first spring receiver 37 and the second spring receiver 38, the thickness of the first spring receiver 37 in the first direction, and the thickness of the second spring receiver 38 in the first direction.

In other words, the length (distance) from the flange portion 321b of the main shaft portion 321a to the other end surface (retaining member 324) in the first direction is set to a length (distance) greater than or equal to the sum of the length of the compression coil spring 36 in a compressed state in the first direction, the difference in the length of the compression coil spring 36 between the extended state and the compressed state (amount of movement of the one clamping member 310 in the first direction), the thickness of the first spring receiver 37 in the first direction, and the thickness of the second spring receiver 38 in the first direction.

In the present example embodiment, the length (distance) from the flange portion 321b of the main shaft portion 321a to the other end surface (retaining member 324) in the first direction is set to a length (distance) equal to the sum of the length of the compression coil spring 36 in a compressed state in the first direction, the difference in the length of the compression coil spring 36 between the extended state and the compressed state (amount of movement of the one clamping member 310 in the first direction), the thickness of the first spring receiver 37 in the first direction, and the thickness of the second spring receiver 38 in the first direction. Here, the extended state of the compression coil spring 36 includes not only a maximum extended state in which the compression coil spring 36 has a natural length but also a state in which the compression coil spring 36 has not reached the maximum extended state (natural length). In other words, the extended state of the compression coil spring 36 means a maximum extended state while the device is in use (design state), and includes a state in which the compression coil spring 36 does not reach the natural length thereof and exerts an elastic force because the clamping member has reached a limit of the movable range thereof or because the second spring receiver 38 and the retaining member 324 have come into contact with each other. Additionally, the compressed state of the compression coil spring 36 includes not only a maximum contracted (compressed) state, but also a state in which the compression coil spring 36 has not reached the maximum contracted (compressed) state. In other words, the contracted state of the compression coil spring 36 includes a state in which the compression coil spring 36 is not fully compressed because the clamping member has reached a limit of the movable range thereof.

The rack 323 described below is coupled to one end portion of the shaft body 321 (main shaft portion 321a) inserted through the through hole 370 in the first spring receiver 37 and extending in the first direction.

As illustrated in FIGS. 6 to 9, the reciprocating body 315 is supported by the frame 33 such that the reciprocating body 315 is movable in the first direction. In other words, the reciprocating body 315 includes guided portions 315a guided by first beams 330, 330 (guide grooves 330a) of the frame 33 described below, and at least one member attachment portion 315b to which one clamping member 310 of the pair of clamping members 310, 311 is attached and that is coupled to the guided portions 315a.

The reciprocating body 315 of the present example embodiment includes a pair of guided portions 315a, 315a that are spaced from each other in the second direction. Each of the pair of guided portions 315a extends in the first direction.

The member attachment portion 315b extends in the second direction, and both ends thereof in the second direction are coupled to the pair of guided portions 315a. In the present example embodiment, the holding device 31 includes two pairs of clamping members 310, 311. Accordingly, the reciprocating body 315 includes two member attachment portions 315b, 315b for attaching the clamping members 310 of the respective pairs. The two member attachment portions 315b, 315b are spaced from each other in the first direction, and both ends of each of the member attachment portions 315b, 315b in the second direction are coupled to the pair of guided portions 315a, 315a. Accordingly, the pair of (two) guided portions 315a, 315a and the two member attachment portions 315b, 50b are integrated into a rectangular frame shape when viewed from the third direction. Additionally, the reciprocating body 315 includes a coupling portion 315c that extends in the second direction at a location between the two member attachment portions 315b, 315b and that is coupled to the pair of guided portions 315a at both ends thereof in the second direction.

The first spring receiver 37 that receives one end of the biasing member 36 (compression coil spring 36) is provided on an upper surface of the coupling portion 315c. The first spring receiver 37 is tab-shaped (plate-shaped) and has a thickness in the first direction. The first spring receiver 37 has a through hole extending therethrough in the first direction, in which the shaft body 321 (main shaft portion 321a) is inserted.

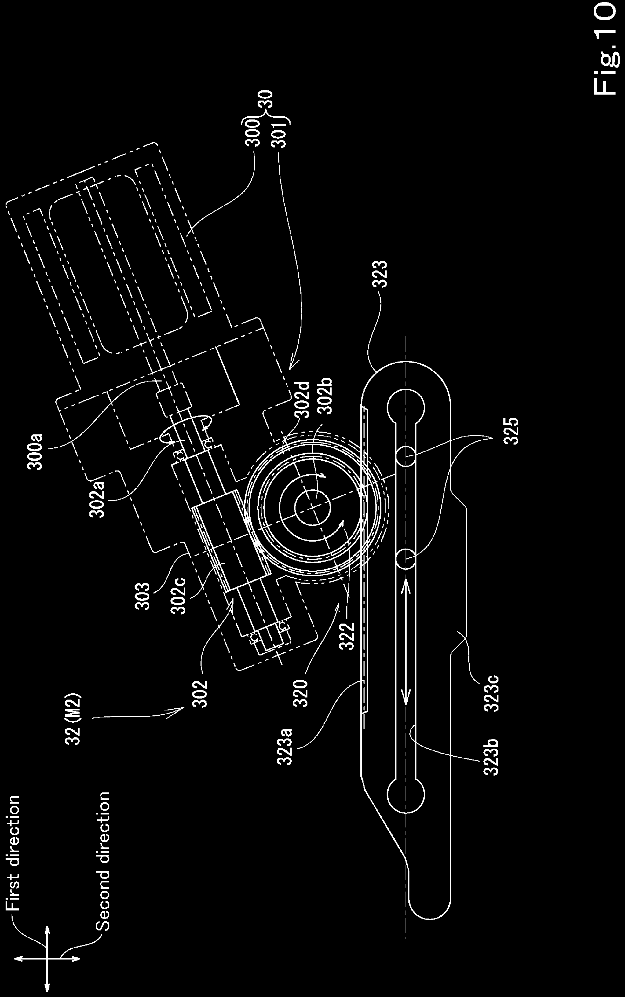

A geared motor is used as the electric actuator 30 of the second mechanism M2. More specifically, as illustrated in FIG. 10, the electric actuator 30 includes an electric motor 300 including an output shaft 300a, and a drive transmission mechanism (hereinafter referred to as a "first drive transmission mechanism") 301 that transmits rotational driving force of the output shaft 300a of the electric motor 300 and that outputs rotation of the output shaft of the electric motor 211 at the same speed or a reduced speed.

The electric motor 300 is driven by electric power supplied from the battery B of the flying object 2. Additionally, the electric motor 300 is connected to the control board CB of the flying object 2, and controlled by the control board CB of the flying object 2.

In the present example embodiment, the first drive transmission mechanism 301 includes a gear mechanism 302, and a casing 303 accommodating the gear mechanism 302 and directly coupled to the electric motor 300.

The gear mechanism 302 includes a first shaft 302a concentrically coupled to the output shaft 300a of the electric motor 211, a second shaft 302b rotatable about an axis extending in a direction orthogonal to the axis of the first shaft 302a, a first gear 302c fixed to the first shaft 302a, and a second gear 302d fixed to the second shaft 302b and meshing with the first gear 302c.

Each of the first shaft 302a and the second shaft 302b is rotatably supported by the casing 303. The gear mechanism 302 (the first gear 302c and the second gear 302d) may be any mechanism configured to transmit rotation between two orthogonal axes and allow rotation in forward and reverse directions. For example, the gear mechanism 302 may be a bevel gear mechanism or a hypoid gear mechanism in which each of the first gear 302c and the second gear 302d is a bevel gear or a miter gear. Additionally, for example, the gear mechanism 302 may be such that the first gear 302c is a worm gear and the second gear 302d is a wheel gear, or such that the first gear 302c and the second gear 302d are helical gears with a helix angle of 45 degrees. Thus, the gear mechanism 302 is configured such that the second shaft 302b rotates forward or reverse at least in response to an input (forward or reverse rotation) to the first shaft 302a. In the present example embodiment, to enable input from the second shaft 302b, a combination of a worm gear and a worm wheel, which causes so-called self-locking that blocks the input from the second shaft 302b, is not used. In other words, the gear mechanism 302 is configured such that, when there is an input from the second shaft 302b, rotation of the second shaft 302b is transmitted to the first gear 302c through the second gear 302d, allowing the first shaft 302a to rotate.

The movement mechanism 32 (second mechanism M2) includes a drive transmission mechanism (hereinafter referred to as a "second drive transmission mechanism 320") that converts the output of the electric actuator 30 into an axial force (biasing force) in the first direction and moves the one clamping member 310 of each pair of clamping members 310, 311 in the first direction.

The second drive transmission mechanism 320 includes a pinion gear 322 attached to a shaft that is mechanically coupled to the second shaft 302b of the electric actuator 30 and rotates concentrically with the second shaft 302b, and the rack 323 meshing with the pinion gear 322.

The pinion gear 322 is located below the electric actuator 30 (second gear 302d). The pinion gear 322 receives a driving force of the electric motor 211 through the first gear 302c and the second gear 302d and rotates together (synchronously) with the second gear 302d concentrically.

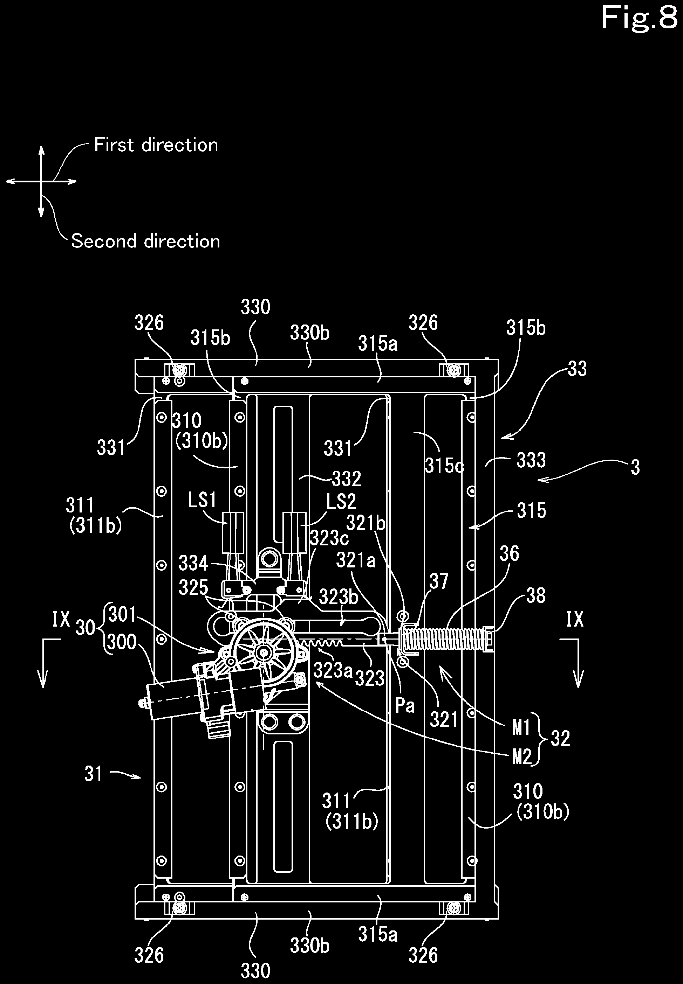

The rack 323 extends in the first direction and is movable in the first direction. In the present example embodiment, the rack 323 is a plate-shaped member that is elongated in the first direction. A row of teeth 323a meshing with the teeth of the pinion gear 322 extends in the first direction at one end portion of the rack 323 in the second direction. The rack 323 has a guided hole 323b in which guide pins 325 fixed to the frame 33 are loosely inserted. The guided hole 323b has the shape of a long hole extending in the first direction, and allows the rack 323 to move in the first direction. In the present example embodiment, as illustrated in FIG. 8, the rack 323 includes a striker 323c at the other end portion thereof in the second direction. The striker 323c actuates limit switches LS1, LS2, and partially projects in the second direction. In the present example embodiment, the striker 323c is trapezoidal when viewed from the third direction. In other words, the striker 323c is flare-shaped such that outer edges at both ends thereof in the first direction are inclined.

The frame 33 includes attachment portions 326 for attaching the frame 33 to the flying object 2 configured to fly in the air. In other words, the frame 33 includes the attachment portions 326 to which the pair of stays 5, 5 attached to the flying object 2 are attached.

More specifically, the frame 33 includes a pair of first beams 330, 330 extending in the first direction and spaced from each other in the second direction, and second beams 331, 332, 333 extending in the second direction, each of which is connected to the pair of first beams 330, 330 at both ends thereof to couple the pair of first beams 330, 330 to each other with a predetermined interval therebetween. The frame 33 also includes an attachment fitting 334 to which the electric actuator 30 is attached.

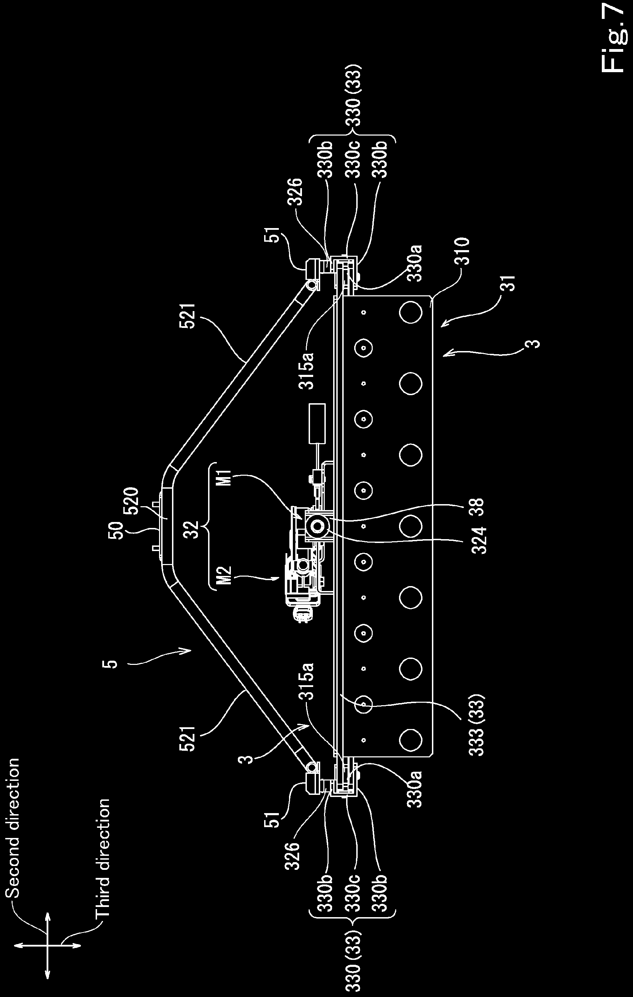

As illustrated in FIGS. 7 and 9, the pair of first beams 330, 330 have guide grooves 330a provided at locations facing each other to guide the guided portions 315a in the first direction. More specifically, each of the pair of first beams 330, 330 includes a pair of opposing pieces 330b, 330b facing and spaced from each other in the third direction, and a connecting piece 330c that is upright in the third direction and couples the pair of opposing pieces 330b, 330b to each other at one end in the second direction. Each of the pair of opposing pieces 330b, 330b and the connecting piece 330c is a strip-shaped piece elongated in the first direction. In the present example embodiment, each of the pair of first beams 330, 330 is produced by bending a metal plate. Accordingly, in each of the pair of first beams 330, 330, the space between the pair of opposing pieces 330b, 330b at the other end in the second direction is open in the second direction.

The pair of first beams 330, 330 are arranged symmetrically about an imaginary plane extending in the first direction and the third direction with the connecting pieces 330c thereof located at the outer ends in the second direction. In other words, the pair of first beams 330, 330 are arranged such that the spaces that are open in the second direction face each other. Accordingly, the pairs of opposing pieces 330b, 330b and the connecting pieces 330c define the guide grooves 330a in which the guided portions 315a of the reciprocating body 315 are placed, and the pair of first beams 330, 330 also define rails for guiding the respective guided portions 315a of the reciprocating body 315 in the first direction.

Additionally, each of the pair of first beams 330, 330 is provided with the attachment portions 326 for attachment to the flying object 2. More specifically, as illustrated in FIG. 8, in each of the pair of first beams 330, 330, the attachment portions 326 are provided on the upper surface of the upper opposing piece 330b of the pair of opposing pieces 330b, 330b spaced from each other in the third direction. Each of the first beams 330, 330 (opposing pieces 330b, 330b) is provided with two attachment portions 326 at locations spaced from each other in the first direction. In other words, the pair of first beams 330, 330 are provided with the attachment portions 326 coupled to the pairs of second coupling portions 51, 51 of the stays 5, 5. The second coupling portions 51, 51 are coupled to the attachment portions 326 by threaded members. Since each of the pair of first beams 330, 330 is provided with two attachment portions 326 corresponding to the pair of second coupling portions 51, 51, the pair of stays 5, 5 are arranged along the first beams 330, 330.

The frame 33 of the present example embodiment further includes the second beams 331, 332, 333. The second beams 331, 332, 333 are spaced from each other in the first direction. The second beams 331, 332, 333 are all elongated in the second direction and strip-shaped. However, since the second beams 331, 332, 333 have different purposes, the widths thereof in the first direction (widths in the transverse direction), the positions at which the second beams 331, 332, 333 are connected to the pair of first beams 330, 330, and the like are different.

More specifically, the frame 33 includes, as the second beams 331, 332, 333, at least one member attachment beam 331 to which the other clamping member 311 is attached, a fitting attachment beam 332 to which the attachment fitting 334 is attached, and a support beam 333 that supports the second spring receiver 38.

In the present example embodiment, since the holding device 31 includes two pairs of clamping members 310, 311, two member attachment beams 331 are provided. The two member attachment beams 331 are spaced from each other in the first direction. Each of the two member attachment beams 331 is coupled to the lower opposing piece 330b of the pair of opposing pieces 330b, 330b included in each of the first beams 330, 330. The two member attachment beams 331 are offset from the central region toward one side in the first direction. In other words, to avoid interference with the two clamping members (clamping members 310) attached to the reciprocating body 315 and secure an interval in which the seedlings Se can be placed between the clamping members 310, 311 of each pair, the two member attachment beams 331 are offset toward one side in the first direction.

The other clamping member 311 is attached to each of the two member attachment beams 331. The other clamping member 311 is fixed to each member attachment beam 331 so as to extend in the longitudinal direction of the member attachment beam. In the present example embodiment, similarly to the one clamping member 310, the other clamping member 311 also includes the fixing tab 311b bent in the first direction. Accordingly, the other clamping member 311 is fixed by placing the fixing tab 311b on the upper surface of the member attachment beam 331 and screw-fastening the upper end portion and the member attachment beam 331 to each other. Thus, the clamping portion 311a of the other clamping member 311 extends downward straight in the third direction from the member attachment beam 331. Accordingly, in the present example embodiment, each member attachment portion 315b of the reciprocating body 315 is provided to be movable in the first direction at a location higher than the member attachment beam 331 (upper end portion of the other clamping member 311).

Since the fitting attachment beam 332 is a beam to which the attachment fitting 334 for fixing the electric actuator 30 is attached, the fitting attachment beam 332 is located to correspond to the location of the electric actuator 30. Additionally, the fitting attachment beam 332 is located so as not to interfere with the movement of the reciprocating body 315 (movement of the clamping members). In the present example embodiment, the fitting attachment beam 332 is located between the other clamping member 311 of one pair and the one clamping member 310 of the other pair (the one clamping member located farthest from the other clamping member 311 paired therewith). The fitting attachment beam 332 is also coupled to the lower opposing piece 330b of the pair of opposing pieces 330b, 330b included in each of the first beams 330, 330. The attachment fitting 334 for fixing the electric actuator 30 is screw-fastened to the upper surface of the fitting attachment beam 332. In addition to the electric actuator 30, the limit switches LS1, LS2 operated by the striker 323c provided on the rack 323 are also fixed to the attachment fitting 334. Two limit switches LS1, LS2 are provided (fixed to the attachment fitting 334) to be spaced from each other in the first direction. Of the two limit switches LS1, LS2, one limit switch LS1 detects an open state (second state) of the one clamping member 310, and the other limit switch LS2 detects a closed state (first state) of the one clamping member 310. In other words, since the position of the rack 323 corresponds to the position (state) of the one clamping member 310, the state of each pair of clamping members 310, 311 (the state of the one clamping member 310) can be determined by causing the striker 323c provided on the rack 323 to operate the limit switches LS1, LS2.

The support beam 333 connects the other end portions of the pair of first beams 330, 330 to each other. The support beam 333 is coupled to the upper opposing piece 330b of the pair of opposing pieces 330b, 330b included in each of the first beams 330, 330. The second spring receiver 38 is located at a substantially central portion of the support beam 333 in the second direction. The second spring receiver 38 is provided to project from the support beam 333. More specifically, the second spring receiver 38 is coupled to the upper surface of the support beam 333 and projects upward from the upper surface of the support beam 333 in the third direction. As described above, the second spring receiver 38 has the through hole 380 extending therethrough in the first direction, in which the main shaft portion 321a of the shaft body 321 is inserted. The through hole 380 in the second spring receiver 38 and the first spring receiver 37 (through hole 370) are concentric with each other in the first direction and have the same diameter. In other words, the first spring receiver 37 (through hole 370) and the second spring receiver 38 (through hole 380) are at the same position (height) in the third direction and concentric with each other. Accordingly, the shaft body 321 is configured to move in the first direction.

In the present example embodiment, as illustrated in FIG. 9, the seedling holding device 3 includes the sensing device 34. The sensing device 34 detects whether or not the seedlings Se (leaves or stems) are between the clamping members 310, 311 of each pair. Accordingly, the seedling holding device 3 is set to the first state when the seedlings Se are detected as being present between the pair of clamping members 310, 311. The sensing device 34 includes a transmitter 340 that transmits a signal and a receiver 341 that receives the signal from the transmitter. A transmitting unit 340a of the transmitter 340 that emits the signal and a receiving unit 341a of the receiver 341 that receives the signal are located to face each other. For example, an optical sensor (for example, an infrared sensor or a laser sensor) is used as the sensing device 34. In other words, in this type of sensing device 34, the transmitting unit 340a emits an optical signal, and the receiving unit 341a receives the optical signal from the transmitting unit 340a.

Accordingly, in the sensing device 34 of the present example embodiment, the transmitter 340 is attached to the one clamping member 310, and the receiver 341 is attached to the other clamping member 311. More specifically, the pair of clamping members 310, 311 have respective holes that are located to face each other to allow a signal to pass therethrough in the first direction. Accordingly, the transmitting unit 340a of the transmitter 340 is fixed to the one clamping member 310 of the pair of clamping members 310, 311 such that the transmitting unit 340a corresponds to the hole in the one clamping member 310. The receiving unit 341a of the receiver 341 is fixed to the other clamping member 311 of the pair of clamping members 310, 311 such that the receiving unit 341a corresponds to the hole in the other clamping member 311. Since the pair of clamping members 310, 311 clamp the seedlings Se between the opposing surfaces thereof, the transmitter 340 and the receiver 341 are fixed to surfaces of the pair of clamping members 310, 311 opposite to the opposing surfaces (clamping surfaces) thereof.

Since two pairs of clamping members 310, 311 are provided in the present example embodiment, all of the clamping members have holes at locations corresponding to each other (holes concentric in the first direction), and the transmitter 340 and the receiver 341 are attached to the outermost clamping members in the first direction. In this case, when neither pair of clamping members 310, 311 has the seedlings Se present therebetween, no object that blocks the signal from the transmitter (transmitting unit 340a) is present between the clamping members 310, 311 of each pair. Therefore, the signal from the transmitter 340 (transmitting unit 340a) can be received by the receiver 341 (receiving unit 341a), and it can be determined that neither pair of clamping members 310, 311 has the seedlings Se therebetween. In contrast, when the clamping members 310, 311 of each pair have the seedlings Se present therebetween, the seedlings Se are present between the clamping members 310, 311 of each pair as an object that blocks the signal from the transmitter (transmitting unit 340a). Accordingly, the signal from the transmitter 340 (transmitting unit 340a) is blocked by the seedlings Se and cannot be received by the receiver 341 (receiving unit 341a). Thus, it can be determined that the seedlings Se are present between the pair of clamping members 310, 311.

As described above, in the agricultural flying apparatus 1 having the above-described configuration, the electric actuator 30 is actuated by electric power supplied from the flying object 2, and when the supply of electric power is stopped, the output shaft of the electric actuator 30 (electric motor 211) is enabled to rotate freely (to be freely rotatable). More specifically, when the power of the agricultural flying apparatus 1 of the present example embodiment is turned on, the electric actuator 30 is actuated to move the rack 323 and the shaft body 321 toward the other side in the first direction through the first transmission mechanism and the second drive transmission mechanism 320. In this state, the flange portion 321b of the shaft body 321 pushes the first spring receiver 37. In other words, the electric actuator 30 moves the first spring receiver 37 toward the other side in the first direction against the biasing of the biasing member 36. Accordingly, in each pair of clamping members 310, 311, the one clamping member 310 mechanically connected to the reciprocating body 315 also moves in the same direction. In other words, the one clamping member 310 moves away from the other clamping member 311. Then, when the striker 323c operates one limit switch LS1, it is determined that the one clamping member 310 is at the farthest position (in a state in which the seedlings Se can be placed between the pair of clamping members 310, 311), and the movement of the one clamping member 310 is stopped.

However, as described above, if the supply of electric power to the electric actuator 30 (electric motor 211) is stopped, the output shaft of the electric motor 211 is enabled to rotate freely, allowing the compression coil spring 36 to push back the first spring receiver 37. Accordingly, in the present example embodiment, when the one limit switch LS1 is operated, electric power is continuously supplied to the electric actuator 30 (electric motor 211) so that the electric actuator 30 (electric motor 211) generates an axial force (output) that matches the biasing force of the compression coil spring 36. Then, when the seedlings Se are placed between the clamping members 310, 311 of each pair, the sensing device 34 (the transmitter 340 and the receiver 341) detects the seedlings Se. In other words, it is detected that each pair of clamping members 310, 311 is ready to hold the seedlings Se. In this state, the supply of electric power from the battery B of the body 20 to the electric actuator 30 is stopped. Accordingly, the output shaft of the electric motor 211 is enabled to rotate freely, and the first spring receiver 37 is pushed back by the biasing force of the biasing member 36 (compression coil spring 36). Although the rack 323 also moves in the same direction and applies rotational torque to the pinion gear 322 at this time, the electric motor 211 and the like allow the rotation without obstruction. When the first spring receiver 37 moves, the one clamping member 310 approaches the other clamping member 311, and the seedlings Se between the clamping members 310, 311 of each pair are held by the pair of clamping members 310, 311. In this state, the striker 323c of the rack 323 operates the other limit switch LS2, so that it can be determined that the seedlings Se are held by each pair of clamping members 310, 311.

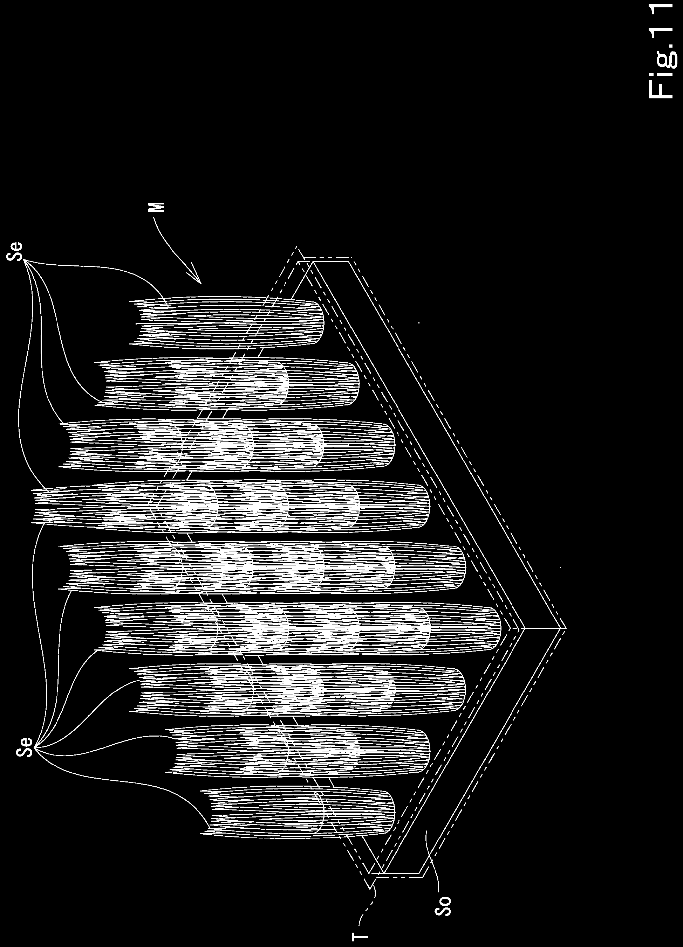

The agricultural flying apparatus 1 of the present example embodiment is configured as described above. A method for carrying the seedlings Se using the agricultural flying apparatus 1 having the above-described configuration will now be described. In an example described in the present example embodiment, the seedlings Se to be carried are rice seedlings, and a large number of rice seedlings Se are transported (carried) to a rice transplanter defining a destination. Before describing the carrying method, the seedling raising mat M will first be described. As illustrated in FIG. 11, the seedling raising mat M is a mat-shaped body having a rectangular shape in plan view obtained by growing (raising) a large number of seedlings Se in soil So placed in a shallow tray T having a rectangular or oblong rectangular shape in plan view so that the roots of the seedlings Se spread through the soil So and hold the soil So together. Each of the large number of seedlings Se on the seedling raising mat M grows with leaves and/or stems located above the roots in the soil So. The large number of seedlings Se on the seedling raising mat M are arranged irregularly or aligned in longitudinal and transverse directions (in a vertical direction corresponding to the first direction and a horizontal direction corresponding to the second direction) in plan view. FIG. 11 illustrates the seedling raising mat M in which the large number of seedlings Se are aligned in the vertical and horizontal directions and that is removed from the tray T indicated by the two-dot chain lines (imaginary lines).

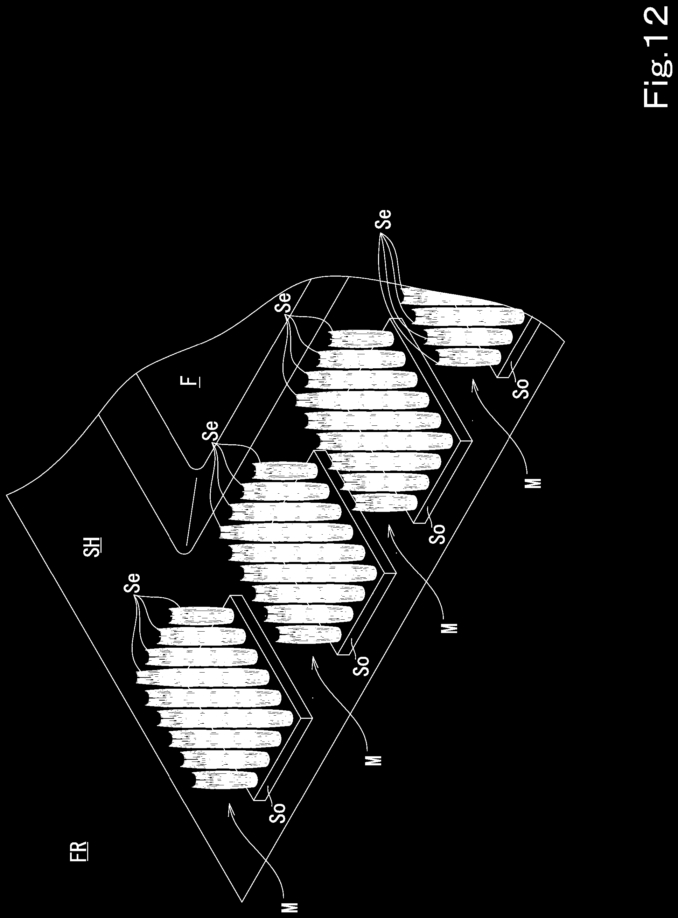

In the present example embodiment, the large number of seedlings Se on the seedling raising mat M are simultaneously carried (transported) to the rice transplanter in an agricultural field F. Accordingly, as illustrated in FIG. 12, a starting point for the seedling raising mat M (seedlings Se) is generally a ridge SH around the agricultural field F, an alley (farm road) FR, or a specially provided platform near the agricultural field F. Accordingly, before the rice transplanter is operated (before the seedlings Se are carried), a plurality of seedling raising mats M (seedlings Se) are arranged on a flat ground surface of the ridge SH or the alley (farm road) FR, or a flat top surface of the specially provided platform. FIG. 12 illustrates the seedling raising mats M arranged on the flat ground surface of the ridge SH.

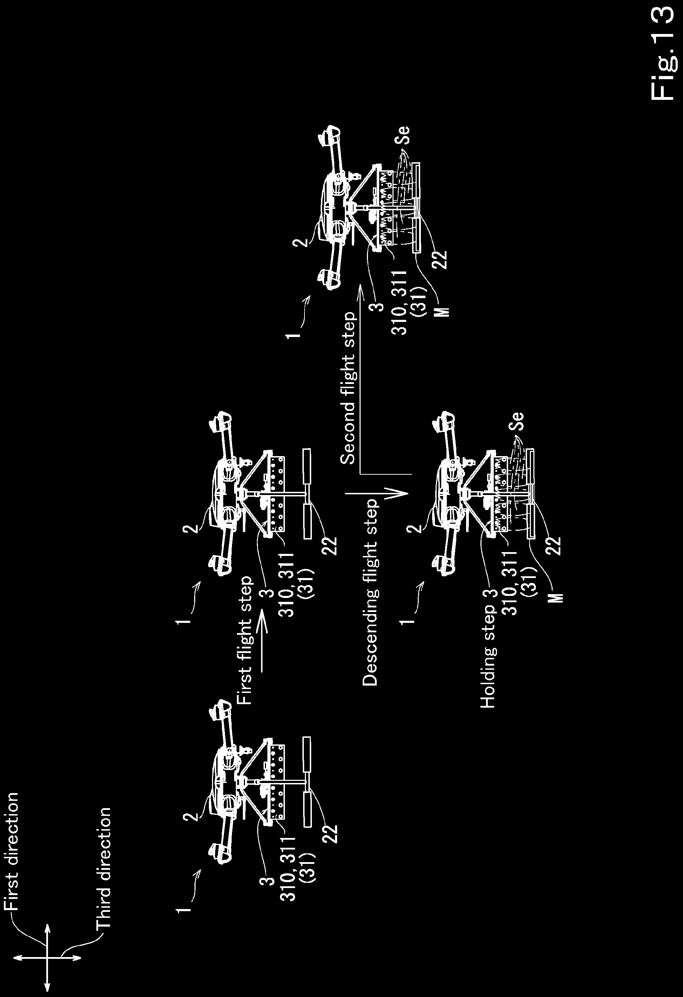

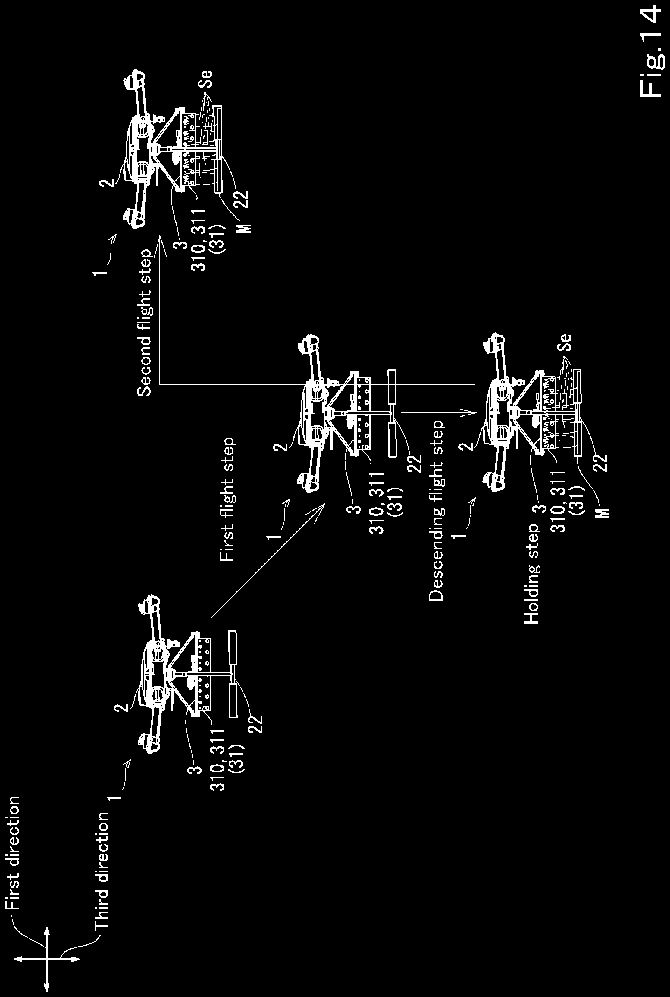

When the rice transplanter continuously performs rice planting in the agricultural field F and it is necessary to supply the seedlings Se to the rice transplanter, as illustrated in FIGS. 13 and 14, the agricultural flying apparatus 1 including the seedling holding device 3 having the above-described configuration is used to carry (transport) the seedlings Se (seedling raising mat M) to the rice transplanter. More specifically, the agricultural flying apparatus 1 waits in the second state, in which the pair of clamping members 310, 311 are separated from each other, until it is necessary to supply the seedlings Se to the rice transplanter. Then, when it is necessary to supply the seedlings Se to the rice transplanter, the flying object 2 lifts the seedlings Se by rising in a state in which at least one portion of the leaf or stem of each of the seedlings Se is held by the seedling holding device 3 (the first state in which the pair of clamping members 310, 311 approach each other to clamp the seedlings Se). Then, after the seedlings Se are lifted, the flying object 2 flies to move the seedlings Se in a horizontal direction.

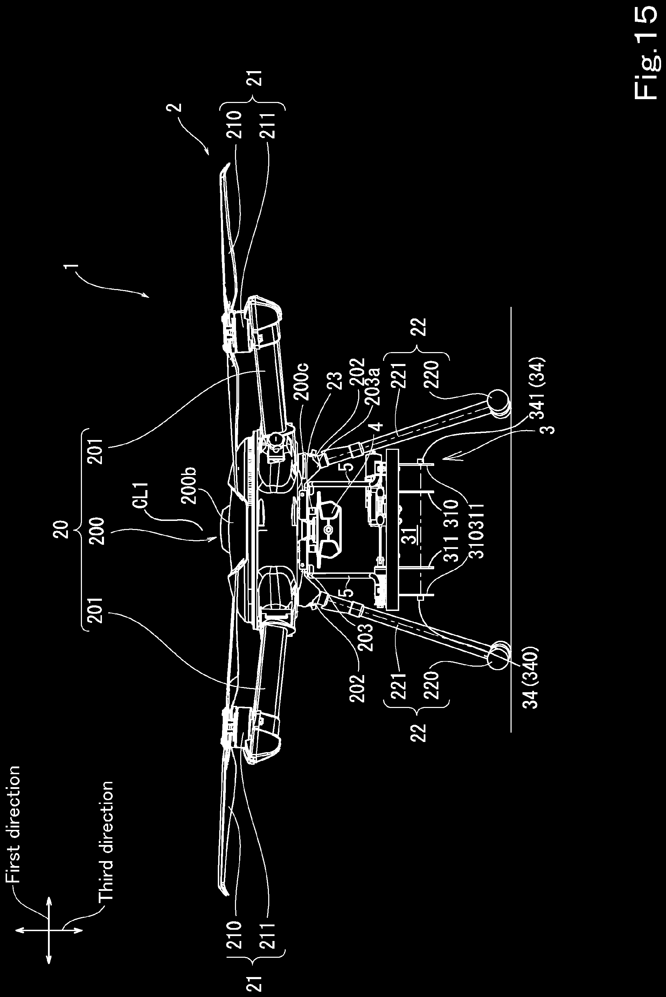

More specifically, when the agricultural flying apparatus 1 is activated, as illustrated in FIG. 15, the electric motor 300 of the electric actuator 30 is driven to move the one clamping member 310 away from the other clamping member 311. Thus, the agricultural flying apparatus 1 waits in a state (second state) in which the seedlings Se can be placed between the clamping members 310, 311 of each pair.

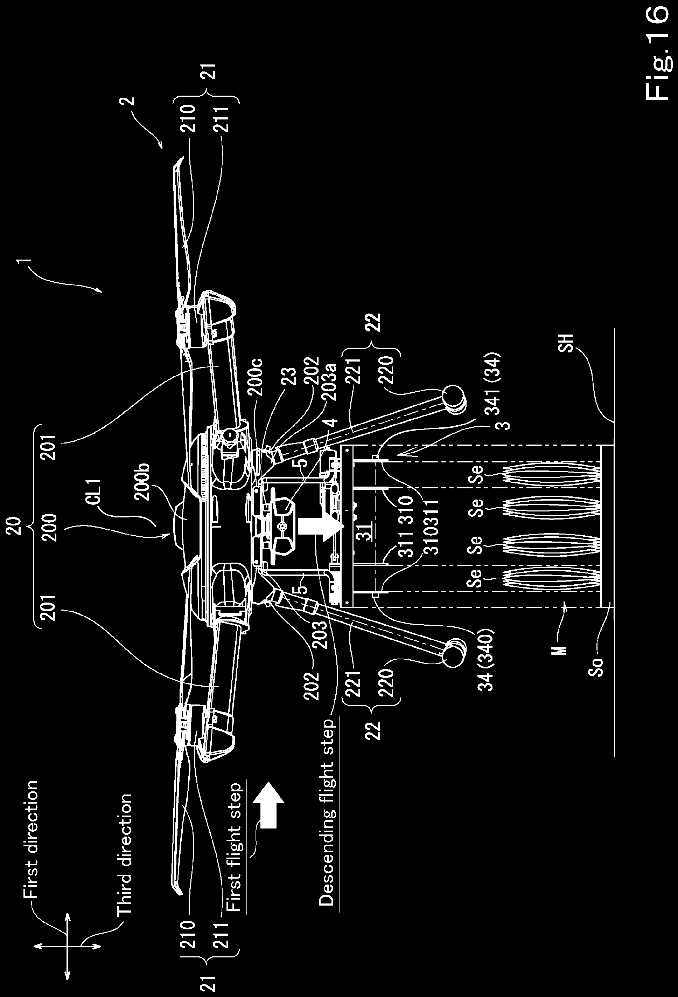

Then, as illustrated in FIGS. 13 and 14, the agricultural flying apparatus 1 is caused to fly to a location above the seedlings Se by remote operation using a remote controller or by autopilot (first flight step). At this time, the agricultural flying apparatus 1 including the seedling holding device 3 including the holding members 310, 311 configured to hold at least one portion of the leave or stem of each of the seedlings Se is caused to fly such that, in plan view, the seedling holding device 3 overlaps the seedlings Se arranged such that the leaf or stem of each of the seedlings Se is located above the root of a corresponding one of the seedlings Se (first flight step). In other words, as illustrated in FIG. 16, the agricultural flying apparatus 1 (flying object 2) is caused to fly to a location above the seedling raising mat M so that the seedlings Se (seedling raising mat M) are positioned within the range of the seedling holding device 3 when viewed from above in the third direction. More preferably, the agricultural flying apparatus 1 (flying object 2) is caused to fly such that the seedlings Se are positioned below the gap between the clamping members (holding members) 310, 311 of each pair.

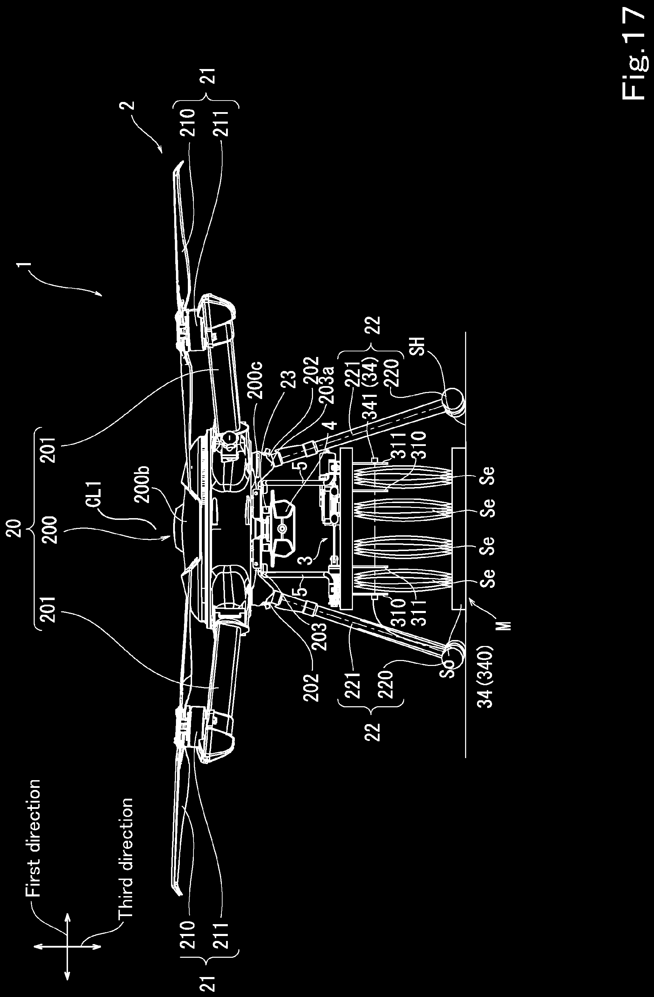

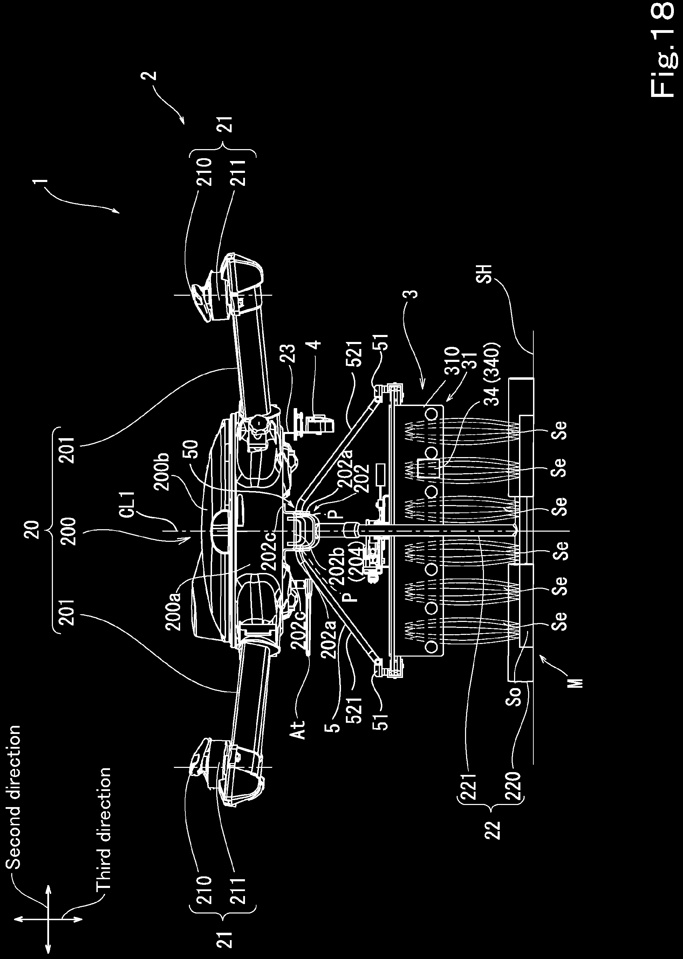

Then, as illustrated in FIGS. 17 and 18, the agricultural flying apparatus 1 is caused to fly to a position at which the holding members 310, 311 overlap the seedlings Se in a direction orthogonal to the up-down direction at a location at which the seedling holding device 3 overlaps the seedlings Se in plan view (descending flight step). In other words, the agricultural flying apparatus 1 is caused to fly to a position at which the clamping members (holding members) 310, 311 overlap the seedlings Se (overlap in projection) in the first direction or the second direction, both of which are orthogonal to the up-down direction (descending flight step). Since the interval between the skids 22, 22 in the first direction is wider than the seedling raising mat M as described above, when the agricultural flying apparatus 1 is caused to fly to the position at which the clamping members (holding members) 310, 311 and the seedlings Se overlap (overlap in projection) in the first direction or the second direction, both of which are orthogonal to the up-down direction, the seedlings Se (seedling raising mat M) are located between the pair of skids 22, 22 as illustrated in FIG. 17. When the agricultural flying apparatus 1 is caused to fly to the position at which the holding members 310, 311 and the seedlings Se overlap in a direction orthogonal to the up-down direction in this manner, the clamping members 310, 311 of each pair that are plate-shaped and extend in the second direction are positioned on both sides of the seedlings Se in the first direction. More specifically, the seedling holding device 3 moves downward in the third direction while the interval between the clamping members 310, 310 of each pair in the second state (separated state) corresponds to the seedlings Se in the up-down direction, so that the seedlings Se are positioned between the clamping members 310, 311 of each pair. In particular, since the clamping portions 310a, 311a of the clamping members 310, 311 are plate-shaped, the clamping portions 310a, 311a enter the gaps between the seedlings Se, Se adjacent to each other in the first direction (between rows of the seedlings S), so that the clamping members 310, 311 (clamping portions 310a, 311a) overlap the seedlings Se in projection in the first direction.

Then, when the descending flight step is completed, the leaf or stem of each of the seedlings Se is positioned between the clamping members 310, 311 of each pair, as described above. Accordingly, the holding members are caused to hold the seedlings Se.

In the agricultural flying apparatus 1 of the present example embodiment, as described above, the flying object 2 is a multicopter including a rotary wing device as the generator 21 to generate a flight propelling force to be applied to the body 20. In the descending flight step or a holding step, the rotary wing device is stopped or rotated in the reverse direction in accordance with the timing at which the holding members 310, 311 hold the seedlings Se. As described above, when the clamping members 310, 311 of each pair clamp (hold) the seedlings Se, the skids 22 (ground contact portions 220) are on the ground surface of the ridge SH. When the holding device 31 (clamping members) is lowered so that the holding device 31 (clamping members) approaches the seedlings Se or when the clamping members 310, 311 of each pair clamp (hold) the seedlings Se, the rotary wing device is stopped, rotated in the reverse direction, or rotated at a reduced rotational speed in accordance with the timing at which the clamping members 310, 311 of each pair are positioned on both sides of the seedlings Se.

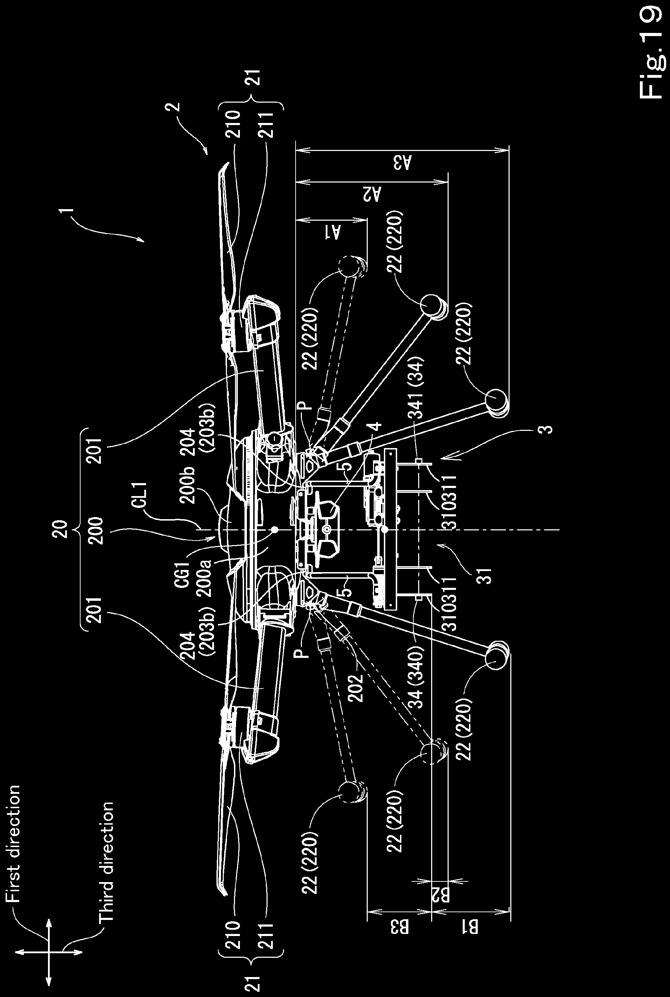

When the rotary wing device is stopped, rotated in the reverse direction, or rotated at a reduced rotational speed as described above, the seedlings Se can be easily placed between the clamping members 310, 311 of each pair. When the seedlings Se are held immediately before landing or in a landed state (state in which the ground contact portions 220 of the skids 22, 22 are on the ground), there is a possibility that the seedlings Se will not reach the space between the clamping members 310, 311 of each pair of the holding device 31 located below the body 20 if the lower end portions (ground contact portions 220) of the skids 22, 22 are distant from the body 20 in the third direction. Accordingly, as illustrated in FIG. 19, the skids 22, 22 are rotated in advance to adjust the distance A1, A2, A3 between the body 20 and the lower end portions (ground contact portions 220) of the skids 22, 22 in the third direction. In other words, it is necessary to adjust the distance B1, B2, B3 between the body 20 and the lower end portions (ground contact portions 220) of the skids 22, 22 in the third direction by rotating the skids 22, 22. When the skids 22, 22 define obstacles during flight (during operation) (for example, when the holding device 31 holds the seedlings Se during descent), the lower end portions (ground contact portions 220) of the skids 22 may be positioned (positions thereof may be maintained) after the positions thereof are changed (by rotating the skids 22) to positions higher than the seedling holding device 3 defining the working device (lower ends of each pair of clamping members 310, 311 of the holding device 31) (positions separated from the lower ends of the clamping members 310, 311 by a predetermined distance B3).

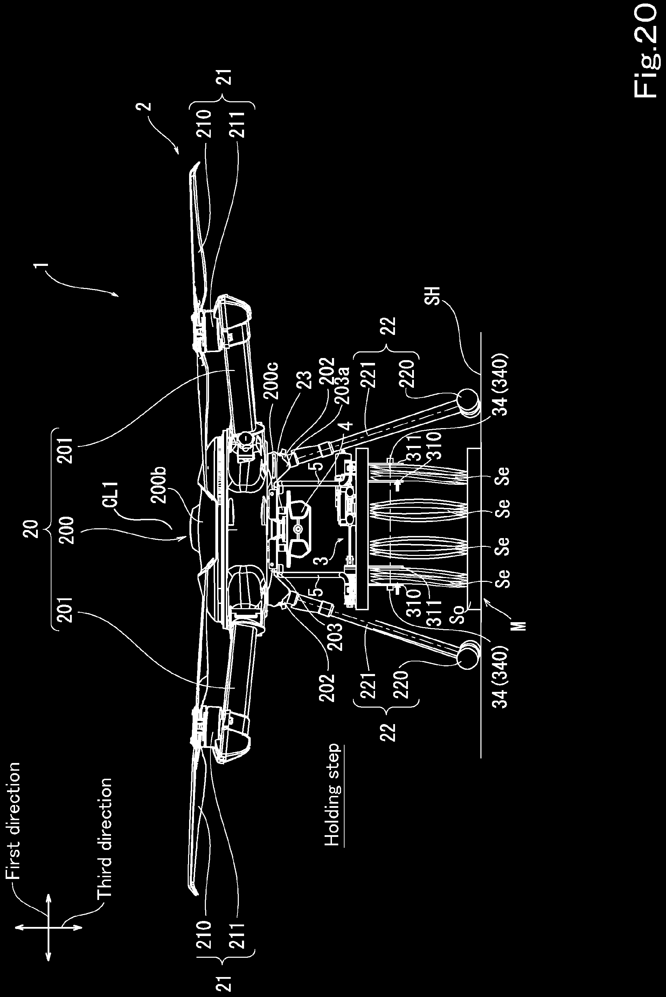

Then, as illustrated in FIG. 20, the seedling holding device 3 clamps at least one portion of the leaf or stem of each of the seedlings Se (holding step). In other words, when the seedlings Se are present between the clamping members 310, 311 of each pair, the clamping members 310, 311 of each pair are caused to approach each other to enter a holding state in which the seedlings Se or the seedlings Se on the seedling material M are held therebetween (holding step). In the present example embodiment, since the agricultural flying apparatus 1 includes the sensing device 34, when the sensing device 34 detects the seedlings Se (when the optical signal from the transmitter 340 is blocked by the seedlings Se and cannot be received by the receiver 341), supply of electric power to the electric motor 211 is cut off, and the output shaft is enabled to rotate freely. In other words, the electric motor 211 that has been driven against the biasing of the biasing member 36 (compression coil spring 36) is stopped. Accordingly, the first spring receiver 37 is biased by the biasing member 36 (compression coil spring 36) and pushed in the first direction, so that the reciprocating body 315 slides in the first direction. Accordingly, the one clamping member 310 approaches the other clamping member 311 and clamps the seedlings Se on the seedling material M together with the other clamping member 311. Since the other clamping member 311 approaches the one clamping member 310 due to the biasing force of the biasing member 36 (compression coil spring 36), in the seedling holding device 3 of the present example embodiment, the biasing force of the biasing member 36 (compression coil spring 36) defines a clamping force for clamping (holding) the seedlings Se. In other words, in the seedling holding device 3 (each pair of clamping members 310, 311), the holding members (clamping members) 310, 311 are pressed against the at least one portion of the leaf or stem of each of the seedlings Se (in the present example embodiment, bundles of leaves of the seedlings Se because the seedlings Se are rice seedlings) in a direction orthogonal to the up-down direction to apply a clamping force that counters the weight of the seedlings Se (seedling raising mat M). Accordingly, the seedling holding device 3 reliably clamps (holds) the seedlings Se (seedling raising mat M).

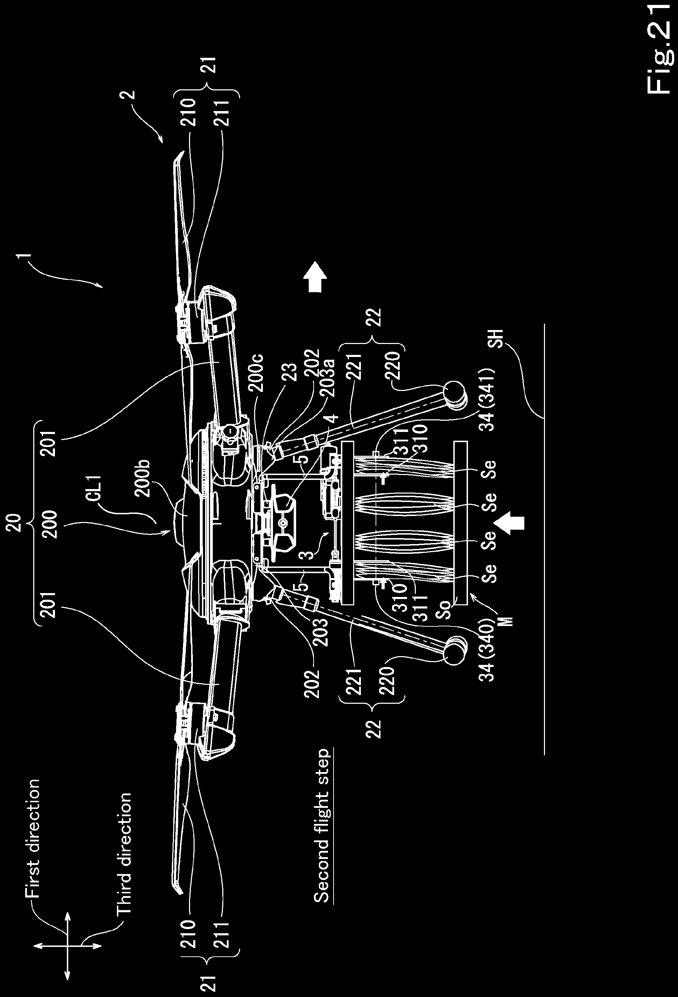

Then, as illustrated in FIG. 21, while the at least one portion of the leaf or stem of each of the seedlings Se (in the present example embodiment, the ends of the leaves of the seedlings Se) is held by the seedling holding device 3, the agricultural flying apparatus 1 is caused to ascend to lift the seedlings Se (second flight step). Then, after the seedlings Se are lifted, the seedlings Se are moved in a horizontal direction, and the agricultural flying apparatus 1 is caused to fly to the rice transplanter defining a destination (second flight step). In other words, after each pair of clamping members 310, 311 hold (clamp) the seedlings Se (after the holding step), the seedlings Se are first lifted from the ground surface of the ridge SH to a desired height, and then moved in the horizontal direction. Thus, the agricultural flying apparatus 1 flies to the destination (rice transplanter) while avoiding obstacles (second flight step). When the seedlings Se (seedling raising mat M) are first lifted as described above, the likelihood of the seedling raising mat M being dragged and losing the soil So is eliminated or reduced. In other words, drying of the roots of the seedlings Se is prevented or reduced.

Then, after the second flight step, while the agricultural flying apparatus 1 is at the destination, the holding device 31 is set to a release state (releasing step). In the present example embodiment, when the agricultural flying apparatus 1 reaches the rice transplanter by remote operation or automatic operation, electric power is supplied to the electric motor 211, and the electric motor 211 is driven. Accordingly, the driving force of the electric motor 211 is transmitted to the rack 323 through the first transmission mechanism and the second transmission mechanism, and the shaft body 321 is moved against the biasing force of the biasing member 36 (compression coil spring 36). As a result, the flange portion 321b of the shaft body 321 comes into contact with the first spring receiver 37, and the first spring receiver 37 moves in the first direction. In other words, the one clamping member 310 moves away from the other clamping member 311. Accordingly, the seedlings Se clamped (held) by each pair of clamping members 310, 311 are released, and the rice seedlings Se are placed on or near the rice transplanter. Accordingly, a worker can supply the seedlings Se to the rice transplanter without bringing the seedlings Se to be supplied to the rice transplanter.

The above-described example embodiment (preferred example embodiment of the present invention) is as described above. The above-described example embodiment includes a large number of inventions including the present invention, and provides, in particular, inventions described in the following Items.

(Item 1-1) An agricultural seedling holding device 3 including a pair of clamping members 310, 311 configured to clamp at least one portion of a leaf or stem of a seedling Se and a movement mechanism 32 including a first mechanism M1 to cause the pair of clamping members 310, 311 to approach each other such as to clamp the at least one portion of the leaf or stem of the seedling Se, and a second mechanism M2 to cause the pair of clamping members 310, 311 to move away from each other, wherein at least one of the first mechanism M1 or the second mechanism M2 includes an electric actuator 30 to move at least one clamping member of the pair of clamping members 310, 311.

According to the agricultural seedling holding device 3 of Item 1-1, at least one of the first mechanism M1 and the second mechanism M2 included in the movement mechanism (driving device) 32 includes the electric actuator 30 to move at least one clamping member 310, 311 of the pair of clamping members 310, 311, so that the electric actuator 30 can be actuated to perform at least one of clamping and releasing of the leaf or stem of the seedling Se by the pair of clamping members 310, 311. Accordingly, the seedling Se can be efficiently handled. Additionally, the movement of at least one clamping member 310, 311 of the pair of clamping members 310, 311 can be electrically controlled, so that oil leakage or the like caused by a hydraulic device, for example, can be prevented or reduced, and the likelihood of the seedling Se and soil being contaminated by oil can be eliminated or reduced.

(Item 1-2) The agricultural seedling holding device 3 according to Item 1-1, wherein the first mechanism M1 causes the pair of clamping members 310, 311 to approach each other in a first direction crossing an up-down direction, and the second mechanism M2 causes the pair of clamping members 310, 311 to move away from each other in the first direction.

According to the agricultural seedling holding device 3 of Item 1-2, the first mechanism M1 and the second mechanism M2 can be actuated to switch between a state in which the pair of clamping members 310, 311 are close to each other and a state in which the pair of clamping members 310, 311 are separated from each other, so that the seedling Se can be reliably clamped (held). When the pair of clamping members 310, 311 are separated from each other, the seedling Se or the seedling Se on the seedling material M receives a reduced clamping force from the pair of clamping members 310, 311, and is released from the clamped (held) state.

(Item 1-3) The agricultural seedling holding device 3 according to Item 1-1 or 1-2, wherein one of the first mechanism M1 or the second mechanism M2 includes the electric actuator 30, and another of the first mechanism M1 or the second mechanism M2 includes a biasing member 36 to bias and move at least one clamping member 310 of the pair of clamping members 310, 311 toward one side in the first direction.

According to the agricultural seedling holding device 3 of Item 1-3, the one of the first mechanism M1 or the second mechanism M2 includes the electric actuator 30, and the other of the first mechanism M1 or the second mechanism M2 includes the biasing member 36 to bias and move the at least one clamping member 310 toward one side in the first direction. Accordingly, the other of the first mechanism M1 or the second mechanism M2 can be actuated to move the at least one clamping member 311 toward one side in the first direction without consuming electric power. Thus, in the configuration in which the pair of clamping members 310, 311 are moved relative to each other, oil leakage or the like caused by a hydraulic device, for example, can be prevented or reduced, and the likelihood of the seedling Se and soil being contaminated by oil can be eliminated or reduced.

(Item 1-4) The agricultural seedling holding device 3 according to Item 1-3, wherein the electric actuator 30 moves the at least one clamping member 310 toward another side in the first direction against biasing of the biasing member 36.

According to the agricultural seedling holding device 3 of Item 1-4, the electric actuator 30 moves the at least one clamping member 310 toward the other side in the first direction against the biasing of the biasing member 36. Thus, the at least one clamping member 310 can be moved by the combination of the electric actuator 30 and the biasing member 36.

(Item 1-5) The agricultural seedling holding device 3 according to Item 1-4, wherein when the other of the first mechanism M1 or the second mechanism M2 moves the at least one clamping member 310 toward the one side in the first direction by the biasing of the biasing member 36, the one of the first mechanism M1 or the second mechanism M2 stops driving the electric actuator 30 to allow the biasing member 36 to move the at least one clamping member 310 toward the one side in the first direction.

According to the agricultural seedling holding device 3 of Item 1-5, when the other of the first mechanism M1 or the second mechanism M2 moves the at least one clamping member 310 in the first direction by the biasing of the biasing member 36, the one of the first mechanism M1 or the second mechanism M2 stops driving the electric actuator 30 to allow the biasing member 36 to move the one clamping member 310 in the first direction. Thus, by stopping the operation of the electric actuator 30, the one clamping member 310 can be moved in the first direction by the biasing force of the biasing member 36 without driving the electric actuator 30.

(Item 1-6) The agricultural seedling holding device 3 according to Item 1-5, wherein the first mechanism M1 includes the biasing member 36 and moves the at least one clamping member 310 toward the one side in the first direction by a biasing force of the biasing member 36 to cause the at least one clamping member 310 to approach the other clamping member 311, and the second mechanism M2 includes the electric actuator 30 and moves the at least one clamping member 310 toward the other side in the first direction by driving the electric actuator to cause the at least one clamping member 310 to move away from the other clamping member 311.

According to the agricultural seedling holding device 3 of Item 1-6, the biasing force of the biasing member 36 functions as a clamping force for clamping the seedlings Se. Since the biasing force of the biasing member 36 is mechanically determined, the clamping force applied to the seedlings Se is maintained within a certain range, so that damage to the seedlings Se due to clamping can be reduced.

(Item 1-7) The agricultural seedling holding device 3 according to Item 1-6, wherein the agricultural seedling holding device 3 includes a plurality of the pairs of clamping members 310, 311 and the movement mechanism 32 synchronously moves the at least one clamping member 310 of each of the plurality of pairs of clamping members 310, 311 in the first direction.

The agricultural seedling holding device 3 of Item 1-7 includes a plurality of the pairs of clamping members 310, 311. Accordingly, when each of the pairs of clamping members 310, 311 clamps a seedling Se, a plurality of seedlings Se or a plurality of seedlings Se (portions) on the seedling material M can be clamped (held).

(Item 1-8) The agricultural seedling holding device 3 according to any one of Items 1-1 to 1-8, wherein the electric actuator 30 is located higher than the pair of clamping members 310, 311.

According to the agricultural seedling holding device 3 of Item 1-8, since the electric actuator 30 is located higher than the holding device 31, the likelihood of the electric actuator 30 interfering with the holding device 31 holding the seedlings Se can be eliminated or reduced.

(Item 1-9) The agricultural seedling holding device according to any one of Items 1-1 to 1-8, including a frame 33 to support the movement mechanism 32, wherein the frame 33 includes an attachment portion 326 to attach the frame 33 to a flying object 2 configured to fly in air.

According to the agricultural seedling holding device 3 of Item 1-9, the frame 33 that supports the movement mechanism 32 includes the attachment portion 204 to attach the frame 33 to the flying object 2 configured to fly in the air. Accordingly, the agricultural seedling holding device 3 can be attached to the flying object 2, and the seedling Se can be transported by causing the flying object 2 to fly.

(Item 1-10) The agricultural seedling holding device 3 according to any one of Items 1-1 to 1-9, including a sensing device 34 to detect whether or not the seedling Se is between the pair of clamping members 310, 311, wherein when the sensing device 34 detects that the seedling Se is between the pair of clamping members 310, 311, the first mechanism M1 causes the pair of clamping members 310, 311 to approach each other and hold the seedling Se.

According to the agricultural seedling holding device 3 of Item 1-10, when the sensing device 34 to detect whether or not the seedling Se is between the pair of clamping members 310, 311 detects that the seedling Se is between the pair of clamping members 310, 311, the first mechanism M1 causes the agricultural seedling hold device 3 to enter a first state in which the pair of clamping members 310, 311 approach each other and hold the seedling Se. Since the first state is established, the likelihood of empty clamping can be eliminated or reduced, and the seedling Se can be held automatically.

(Item 2-1) An agricultural flying apparatus 1 including a flying object 2 that includes a body 20 and a generator 21 connected to the body 20 to generate a flight propelling force to be applied to the body 20, and a seedling holding device 3 configured to hold at least one portion of a leaf or stem of a seedling Se, wherein the flying object 2 includes at least one skid 22 extending downward from the body 20, and the seedling holding device 3 is located between the body 20 and a lower end portion of the at least one skid 22.

According to the agricultural flying apparatus 1 of Item 2-1, the seedling holding device 3 configured to hold the seedling Se or the seedling Se on a seedling material M including the seedling Se is located between the body 20 and the lower end portion of the skid 22, so that the holding device 31 is located lower than the body 20 and higher than the lower end portion of the skid 22. Accordingly, when the flying object 2 flies such that the seedling Se is located lower than the holding device 31, the holding device 31 is configured to hold the seedling Se or the seedling Se on the seedling material M.

(Item 2-2) The agricultural flying apparatus 1 according to Item 2-1, wherein at least a lower end portion of the seedling holding device 3 is located between the body 20 and the lower end portion of the at least one skid 22.

According to the agricultural flying apparatus 1 of Item 2-2, the lower end portion of the holding device 31 is located lower than the body 20 and higher than the lower end portion of the skid 22. Accordingly, when the flying object 2 flies such that the seedling Se is located below the lower end portion of the holding device 31, the holding device 31 can hold the seedling Se or the seedling Se on the seedling material M.

(Item 2-3) The agricultural flying apparatus 1 according to Item 2-1, wherein the at least one skid 22 includes a pair of skids 22, 22, the pair of skids 22, 22 are spaced from each other in a first direction orthogonal to an up-down direction, and the seedling holding device 3 is located between the pair of skids 22, 22.

According to the agricultural flying apparatus 1 of Item 2-3, since the holding device 31 is located between the pair of skids 22, 22 arranged such that the interval therebetween in the first direction increases downward from the body 20, the holding device 31 is located such that the seedling holding device 3 is below the body 20 and between the pair of skids 22, 22. Accordingly, the holding device 31 is configured to hold (clamp) the seedling Se or the seedling Se on the seedling material M located therebelow. When the flying object 2 is lowered from above, the skids 22, 22 are less likely to come into contact with an object below, and the pair of skids 22, 22 can be more easily positioned on both sides of the seedling Se or the seedling Se on the seedling material M. Thus, the holding device 31 can be easily set to a state in which the holding device 31 is allowed to hold the seedling Se or the seedling Se on the seedling material M.

(Item 2-4) The agricultural flying apparatus 1 according to Item 2-3, wherein the pair of skids 22, 22 are arranged such that an interval therebetween in the first direction increases downward from the body 20.

According to the agricultural flying apparatus 1 of Item 2-4, the interval between the lower ends of the pair of skids 22, 22 is increased, so that stable landing can be achieved.

(Item 2-5) The agricultural flying apparatus 1 according to Item 2-3, wherein the seedling holding device 3 is configured to hold the seedling included in a seedling raising mat M, and an interval between at least the lower end portions of the pair of skids 22, 22 in the first direction is wider than the seedling raising mat M.

According to the agricultural flying apparatus 1 of Item 2-5, the pair of skids 22, 22 can be easily positioned on both sides of the seedling raising mat M.

(Item 2-6) The agricultural flying apparatus 1 according to any one of Items 2-3 to 2-5, wherein each of the pair of skids 22, 22 includes, at the lower end portion thereof, a ground contact portion 220 extending in a second direction orthogonal to the up-down direction and the first direction, the seedling holding device 3 includes a pair of clamping members 310, 311 configured to move relative to each other in the first direction to switch between a state in which the pair of clamping members 310, 311 are close to each other and another state in which the pair of clamping members 310, 311 are separated from each other, and each of the pair of clamping members 310, 311 extends in the second direction.

According to the agricultural flying apparatus 1 of Item 2-6, the ground contact portions 220 of the pair of skids 22, 22 and the clamping members extend in the same direction. Accordingly, when the clamping members are set to a state in which the clamping members are configured to clamp the seedling Se, the likelihood of the ground contact portions 220 of the skids 22, 22 coming into contact with the seedling Se or the seedling material M can be eliminated or reduced.

(Item 2-7) The agricultural flying apparatus 1 according to any one of Items 2-3 to 2-6, wherein a distance from the body 20 to the lower end portion of each of the pair of skids 22, 22 in the up-down direction is changeable.

According to the agricultural flying apparatus 1 of Item 2-7, since the distance from the body 20 to the lower end portion of each of the pair of skids 22, 22 in the up-down direction is changeable, the position of the holding device 31 relative to the lower ends of the skids 22, 22 is changeable between the body 20 and the lower ends of the skids 22, 22. In other words, the position of the holding device 31 relative to the body 20 is constant, whereas the position of the holding device 31 relative to the lower end portions of the skids 22, 22 is changeable. Thus, since the distance in the third direction between the holding device 31 and the surface on which the lower end portions of the skids 22, 22 are in contact is changeable, a short seedling Se can also be held (clamped).

(Item 2-8) The agricultural flying apparatus 1 according to Item 2-7, wherein an upper end portion of each of the pair of skids 22, 22 is coupled to the body 20 such that each of the pair of skids 22, 22 is rotatable about an axis extending in a second direction orthogonal to the up-down direction and the first direction, and the distance from the body 20 to the lower end portion of each of the pair of skids 22, 22 in the up-down direction is changed by rotating each of the pair of skids 22, 22 about the axis from a state in which each of the pair of skids 22, 22 extends downward from the body 20.

According to the agricultural flying apparatus 1 of Item 2-8, the upper end portion of each of the pair of skids 22, 22 is coupled to the body 20 such that each of the pair of skids 22, 22 is rotatable about the axis extending in the second direction orthogonal to the up-down direction and the first direction, and the distance from the body 20 to the lower end portion of each of the pair of skids 22, 22 in the up-down direction can be easily changed by rotating each of the pair of skids 22, 22 about the axis from the state in which each of the pair of skids 22, 22 extends downward from the body 20. Accordingly, a short seedling Se can also be held (clamped). The rotation of each of the skids 22, 22 about the axis may be stepwise or continuous.

(Item 2-9) The agricultural flying apparatus 1 according to Item 2-7, wherein the pair of skids 22, 22 are extendable and retractable in respective directions in which the pair of skids 22, 22 extend from the body 20, and the distance from the body 20 to the lower end portion of each of the pair of skids 22, 22 in the up-down direction is changed by extending and retracting each of the pair of skids 22, 22.

According to the agricultural flying apparatus 1 of Item 2-9, the pair of skids 22, 22 are extendable and retractable in respective directions in which the pair of skids 22, 22 extend from the body 20, and the distance from the body 20 to the lower end portion of each of the pair of skids 22, 22 in the up-down direction is changeable by extending and retracting each of the pair of skids 22, 22. Accordingly, the distance from the body 20 to the lower end portion of each of the pair of skids 22, 22 in the up-down direction can be easily changed. Accordingly, a short seedling Se can also be held (clamped). The extension and retraction of each of the skids 22, 22 may be stepwise or continuous.

(Item 2-10) The agricultural flying apparatus 1 according to any one of Items 2-1 to 2-9, wherein the generator 21 is a rotary wing device to apply the flight propelling force to the body 20, and the flying object 2 is a multicopter.

According to the agricultural flying apparatus 1 of Item 2-10, since the generator 21 is a rotary wing device to apply the flight propelling force to the body 20 and the flying object 2 is a multicopter, the agricultural flying apparatus 1 is configured to ascend and descend in the third direction, and the holding device 31 can be positioned to correspond to the location of the seedling Se or the seedling material M.

(Item 3-1) An agricultural flying apparatus 1 including a flying object 2 that includes a body 20 and a generator 21 connected to the body 20 to generate a flight propelling force to be applied to the body 20, and a seedling holding device 3 configured to hold at least one portion of a leaf or stem of a seedling Se, the seedling holding device 3 being located below and spaced from the body 20, wherein the flying object includes a bracket 23 to which an electrical component 4 is attachable, and the electrical component 4 attached to the bracket 23 is located between the body 20 and the seedling holding device 3.

According to the agricultural flying apparatus 1 of Item 3-1, the flying object 2 includes the bracket 23 to which the electrical component 4 is attachable, and the electrical component 4 attached to the bracket 23 is located between the body 20 and the seedling holding device 3 arranged in the up-down direction. Accordingly, the space between the body 20 and the seedling holding device 3 can be effectively utilized.

(Item 3-2) The agricultural flying apparatus 1 according to Item 3-1, wherein the bracket 23 projects downward from a lower surface of the body 20.

According to the agricultural flying apparatus 1 of Item 3-2, since the bracket 23 projects downward from the lower surface of the body 20, the electrical component 4 attached to the bracket 23 is also located lower than the lower surface of the body 20.

(Item 3-3) The agricultural flying apparatus 1 according to Item 3-1 or 3-2, including a pair of stays 5, 5 to couple the flying object 2 and the seedling holding device 3 to each other, the pair of stays 5, 5 being spaced from each other in a first direction orthogonal to an up-down direction, wherein the bracket 23 is located between the pair of stays 5, 5.

The agricultural flying apparatus 1 of Item 3-3 includes the pair of stays 5, 5 to couple the flying object 2 and the seedling holding device 3 to each other, the pair of stays 5, 5 being spaced from each other in the first direction orthogonal to the up-down direction. Accordingly, the seedling holding device 3 is maintained at a certain position relative to the body 20 of the flying object 2. Additionally, the pair of stays 5, 5 couple the flying object 2 and the seedling holding device 3 to each other such that the pair of stays 5, 5 are spaced from each other in the first direction, so that the seedling holding device 3 can be coupled to the flying object 2 in a stable manner.

(Item 3-4) The agricultural flying apparatus 1 according to Item 3-3, wherein the electrical component 4 is an imaging device, and the bracket 23 is configured to allow the imaging device to be attached to the bracket 23 such that the imaging device is located between the pair of stays 5, 5 and that an imaging direction of the imaging device is a second direction orthogonal to the up-down direction and the first direction.

According to the agricultural flying apparatus 1 of Item 3-4, since the electrical component is the imaging device and the bracket 23 is configured to allow the imaging device to be attached to the bracket 23 such that the imaging device is located between the pair of stays 5, 5 and that the imaging direction of the imaging device is the second direction orthogonal to the up-down direction and the first direction, the skids 22, 22 and the stays 5, 5 are not present in an imaging region of the imaging device. This enables appropriate imaging in the imaging direction. Accordingly, the flying object 2 can be maneuvered and the seedling holding device 3 can be operated by using an image captured by the imaging device.

(Item 3-5) The agricultural flying apparatus 1 according to Item 3-3, wherein the electrical component 4 is a distance sensor, and the bracket 23 is configured to allow the distance sensor 4 to be attached to the bracket such that the distance sensor 4 is located between the pair of stays 5, 5 and that a measurement direction of the distance sensor 4 is a second direction orthogonal to the up-down direction and the first direction.

According to the agricultural flying apparatus 1 of Item 3-5, since the electrical component is the distance sensor and the bracket 23 is configured to allow the distance sensor to be attached to the bracket 23 such that the distance sensor is located between the pair of stays 5, 5 and that the measurement direction of the distance sensor is the second direction orthogonal to the up-down direction and the first direction, the skids 22, 22 and the stays 5, 5 are not present in a measurement region of the distance sensor. This enables appropriate measurement (distance measurement) in the measurement direction. Accordingly, the flying object 2 can be maneuvered and the seedling holding device 3 can be operated by using a measurement result obtained by the distance sensor.

(Item 3-6) The agricultural flying apparatus 1 according to any one of Items 3-1 to 3-4, wherein the flying object 2 includes a battery B to store electric power, the generator 21 is a rotary wing device driven by electric power from the battery B to generate the flight propelling force; and the electrical component 4 is operated by electric power supplied from the battery B.

According to the agricultural flying apparatus 1 of Item 3-6, the flying object 2 includes the battery B to store electric power, the generator 21 is the rotary wing device driven by electric power from the battery B to generate the flight propelling force, and the electrical component 4 is operated by electric power supplied from the battery B. Accordingly, the flying object 2 is configured to fly without oil leakage or the like that leads to soil contamination.

(Item 3-7) The agricultural flying apparatus 1 according to Item 3-5, wherein the rotary wing device includes a propeller 210 to rotate about a predetermined axis, and an electric motor 211 to receive electric power supplied from the battery B and rotationally drive the propeller 210.

According to the agricultural flying apparatus 1 of Item 3-7, since electric power supplied from the battery B is used for operation, the flying object 2 is configured to fly without oil leakage or the like that leads to soil contamination.

(Item 4-1) An agricultural flying apparatus 1 including a flying object 2 that includes a body 20 and a generator 21 connected to the body 20 to generate a flight propelling force to be applied to the body 20, and a support member 5 coupled to the flying object 2 and configured to support a working device 3 at a location lower than the body 20.

According to the agricultural flying apparatus 1 of Item 4-1, since the working device 3 that performs a predetermined function on a work target object located therebelow is located below the body 20 of the flying object 2, the predetermined function can be performed without degradation of the function of the working device 3.

(Item 4-2) The agricultural flying apparatus 1 according to Item 4-1, wherein the working device 3 is configured to perform agricultural work, and the support member 5 couples the body 20 and the working device 3 to each other.

The agricultural flying apparatus 1 of Item 4-2 includes the working device 3 to perform agricultural work, and the working device 3 is coupled to the body 20 by the support member 5 such that the working device 3 is located below the body 20 of the flying object 2. Accordingly, the predetermined function can be performed without degradation of the function of the working device 3.

(Item 4-3) The agricultural flying apparatus 1 according to Item 4-1 or 4-2, wherein the flying object 2 includes a skid 22, and the support member 5 supports the working device 3 such that the working device 3 is located between the body 20 and a lower end portion of the skid 22.

According to the agricultural flying apparatus 1 of Item 4-3, since the working device 3 is located between the body 20 and the lower end portion of the skid 22, the working device 3 is configured to perform work on the work target object located therebelow.

(Item 4-4) The agricultural flying apparatus 1 according to Item 4-3, wherein a position of the lower end portion of the skid 22 is changeable to a position higher than a lower end of the working device 3.

According to the agricultural flying apparatus 1 of Item 4-4, the position of the lower end portion of the skid 22 is changeable to a position higher than the working device 3. Accordingly, when the working device 3 performs agricultural work, the likelihood of the skid 22 coming into contact (interfering) with the work target object located therebelow or with the ground is eliminated or reduced. This enables smooth operation of the working device 3.

(Item 4-5) The agricultural flying apparatus 1 according to any one of Items 4-1 to 4-4, wherein the support member 5 is configured to support the working device 3 at a plurality of locations spaced from each other in a first direction orthogonal to an up-down direction and at a plurality of locations spaced from each other in a second direction orthogonal to the up-down direction and the first direction.

According to the agricultural flying apparatus 1 of Item 4-5, since the support member 5 supports the working device 3 at a plurality of locations, the body 20 and the working device 3 can be strongly (rigidly) coupled to each other. Accordingly, swinging of the working device 3 during flight or operation can be reduced, and the working device 3 can more easily perform work on the work target object located therebelow.

(Item 4-6) The agricultural flying apparatus 1 according to Item 4-2, wherein the flying object 2 includes a battery B to store electric power, the generator 21 is a rotary wing device driven by electric power from the battery B to generate the flight propelling force, the working device 3 includes an electric actuator 30 to perform a predetermined function, and the electric actuator 30 is operated by electric power supplied from the battery B.

According to the agricultural flying apparatus 1 of Item 4-6, since electric power is supplied to the electric actuator 30 of the working device 3 from the battery B of the flying object, the working device 3 can be operated without using an additional battery B.

(Item 4-7) The agricultural flying apparatus 1 according to Item 4-6, wherein the working device 3 includes a seedling holding device 3 including a pair of clamping members 310, 311 to move in a first direction orthogonal to an up-down direction to switch between a first state in which the pair of clamping members 310, 311 are close to each other such as to be allowed to hold at least one portion of a leaf or stem of a seedling Se and a second state in which the pair of clamping members 310, 311 are separated from each other to cancel the first state, and a driving device 32 to switch the seedling holding device 3 between the first state and the second state, and the driving device 32 includes the electric actuator 30, and a movement mechanism 32 driven by the electric actuator 30 to move at least one clamping member of the pair of clamping members 310, 311 in the first direction.

According to the agricultural flying apparatus 1 of Item 4-7, the flying object 2 can be caused to fly to place the holding device 31 at a position corresponding to the seedling Se located therebelow. Then, the electric actuator 30 can be driven to cause the movement mechanism 32 to move at least one of the pair of clamping members 310, 311 in the first direction so that at least one of the first state and the second state can be established. Accordingly, since the seedling holding device 3 can hold the seedling Se defining the work target object located therebelow, the seedling Se or the seedling material M can be transported (carried) to a destination by causing the flying object 2 to fly while the seedling Se or the seedling Se on the seedling material M is held by the seedling holding device 3. Then, at the destination, the seedling Se or the seedling Se on the seedling material M that is held can be released by setting the holding device 31 to the second state.

(Item 4-8) The agricultural flying apparatus 1 according to Item 4-7, including a sensing device 34 to detect whether or not the seedling Se is between the pair of clamping members 310, 311, wherein when the sensing device 34 detects that the seedling Se is between the pair of clamping members 310, 311, the driving device 32 allows the at least one clamping member 310 to move in the first direction.

The agricultural flying apparatus 1 of Item 4-8 includes the sensing device 34 to detect whether or not the seedling Se or the seedling Se on the seedling material M is between the pair of clamping members 310, 311, and when the sensing device 34 detects that the seedling Se is between the pair of clamping members 310, 311, the driving device 32 allows the biasing member 36 to move the one clamping member 310 in the first direction. Accordingly, the likelihood of empty clamping can be eliminated or reduced, and the seedlings Se can be held automatically. Additionally, the biasing force of the biasing member 36 moves the one clamping member 310 in the first direction and provides a clamping force (holding force) for holding (clamping) the seedling Se. Since the biasing force of the biasing member 36 is mechanically determined, the clamping force applied to the seedlings Se is maintained within a certain range, so that damage to the seedlings Se due to clamping can be reduced.

(Item 4-9) The agricultural flying apparatus 1 according to any one of Items 4-7 to 4-10, wherein the rotary wing device includes a propeller 210 rotatable about an axis extending in the up-down direction, and a motor to receive electric power supplied from the battery B and rotationally drive the propeller 210, and the propeller 210 is located higher than the seedling holding device 3.

According to the agricultural flying apparatus 1 of Item 4-9, since electric power supplied from the battery B is used for operation, the flying object 2 is configured to fly without oil leakage or the like that leads to soil contamination. Additionally, since the propeller 210 is located higher than the seedling holding device 3, the flying object 2 is configured to fly in a stable manner without losing balance due to the seedling holding device 3.

(Item 4-10) The agricultural flying apparatus 1 according to Item 4-9, wherein the rotary wing device includes a plurality of the propellers 210 arranged around the body 20, and the seedling holding device 3 is located closer to the body 20 than a center of rotation of each of the plurality of the propellers 210.

According to the agricultural flying apparatus 1 of Item 4-10, the rotary wing device includes a plurality of the propellers 210 arranged around the body 20, and the seedling holding device 3 is located closer to the body 20 than the center of rotation of each of the plurality of the propellers 210. Accordingly, the flying object 2 is configured to fly in a stable manner without losing balance due to the seedling holding device 3.

(Item 4-11) The agricultural flying apparatus 1 according to Item 4-5, including a pair of stays 5, 5 defining the support member, the pair of stays 5, 5 being spaced from each other in the first direction, wherein each of the pair of stays 5, 5 includes a first coupling portion 50 coupled to the body 50 of the flying object 2, a pair of inclined sections 521, 521 extending from both ends of the first coupling portion 50 in a second direction orthogonal to the first direction and the up-down direction, the pair of inclined sections 521, 521 being inclined downward in the up-down direction toward distal ends thereof, and a pair of second coupling portions 51, 51 fixed to distal end portions of respective ones of the pair of inclined sections 521, 521, each of the pair of second coupling portions 51, 51 being coupled to the working device 3, and an interval between the pair of inclined sections 521, 521 in the second direction increases from the flying object 2 toward the working device 3.

According to the agricultural flying apparatus 1 of Item 4-11, the pair of stays 5, 5 that couple the flying object 2 and the working device 3 to each other are spaced from each other in the first direction. Accordingly, the flying object 2 and the working device 3 are coupled to each other at two locations in the first direction. Additionally, each of the pair of stays 5, 5 includes the first coupling portion 50 coupled to the body 20 of the flying object 2; the pair of inclined sections 521, 521 extending from both ends of the first coupling portion 50 in the second direction orthogonal to the first direction and the up-down direction, the pair of inclined sections 521, 521 being inclined downward in the up-down direction toward the distal ends thereof; and the pair of second coupling portions 51, 51 fixed to distal end portions of respective ones of the pair of inclined sections 521, 521, each of the pair of second coupling portions 51, 51 being coupled to the working device 3. The interval between the pair of inclined sections 521, 521 in the second direction increases from the flying object 2 toward the working device 3. Accordingly, the pair of second coupling portions 51, 51 are coupled to the working device 3 at locations spaced from each other in the second direction. Since each of the pair of stays 5, 5 is fixed to the working device 3 at two locations in the second direction, the working device 3 can be coupled to the body 20 in a stable manner. Accordingly, the agricultural flying apparatus 1 having the above-described configuration is configured to fly in a stable manner without losing balance due to the working device 3.

(Item 4-12) The agricultural flying apparatus 1 according to Item 4-2, wherein the working device 3 is configured to perform at least one of cultivation, seeding, and mowing.

According to the agricultural flying apparatus 1 of Item 4-12, since the working device 3 performs at least one of cultivation, seeding, and mowing, work other than handling of the seedling Se can be performed.

(Item 5-1) A seedling carrying method using an agricultural flying apparatus 1, the seedling carrying method including lifting a seedling Se by causing a flying object 2 to fly while at least one portion of a leaf or stem of the seedling Se is held by a seedling holding device 3.

According to the carrying method of Item 5-1, since the seedling Se is lifted, the seedling Se can be carried without being affected by ground conditions.

(Item 5-2) The seedling carrying method using the agricultural flying apparatus 1 according to Item 5-1, including moving the seedling Se in a horizontal direction by causing the flying object 2 to fly after lifting the seedling Se.

According to the carrying method of Item 5-2, since the seedling Se is moved in the horizontal direction, the seedling Se can be moved linearly and along the shortest route.

(Item 5-3) A seedling carrying method using an agricultural flying apparatus 1, the seedling carrying method including a first flight step of causing the agricultural flying apparatus 1 including a seedling holding device 3 to fly such that the seedling holding device 3 overlaps a seedling Se in plan view, the seedling holding device 3 including a holding member 310, 311 configured to hold at least one portion of a leaf or stem of the seedling Se positioned such that the leaf or stem is above a root of the seedling, a holding step of causing the holding member 310, 311 of the seedling holding device 3 to hold the at least one portion of the leaf or stem of the seedling Se, and a second flight step of lifting the seedling Se by causing the agricultural flying apparatus 1 to ascend while the at least one portion of the leaf or stem of the seedling Se is held by the seedling holding device 3.

The carrying method of Item 5-3 includes the first flight step of causing the agricultural flying apparatus 1 including the seedling holding device 3 to fly such that the seedling holding device 3 overlaps the seedling Se in plan view, the seedling holding device 3 including a holding member 310, 311 configured to hold at least one portion of the leaf or stem of the seedling Se; the holding step of causing the holding member 310, 311 of the seedling holding device 3 to hold the at least one portion of the leaf or stem of the seedling Se, and the second flight step of lifting the seedling Se by causing the agricultural flying apparatus 1 to ascend while the at least one portion of the leaf or stem of the seedling Se is held by the seedling holding device 3. Accordingly, the seedling Se can be transported while the seedling Se is reliably held.

(Item 5-4) The seedling carrying method using the agricultural flying apparatus 1 according to Item 5-3, wherein the first flight step includes a descending flight step of causing the agricultural flying apparatus 1, at a location at which the seedling holding device 3 overlaps the seedling Se in plan view, to fly to a position at which the holding member 310, 311 and the seedling Se overlap in a direction orthogonal to the up-down direction.

According to the carrying method of Item 5-4, since the holding member 310, 311 is located to overlap the seedling Se in the first flight step, the likelihood of empty clamping can be eliminated or reduced, and the seedlings Se can be held automatically.

(Item 5-5) The seedling carrying method using the agricultural flying apparatus 1 according to Item 5-3, wherein, in the holding step, the seedling holding device 3 clamps the at least one portion of the leaf or stem of the seedling Se.

According to the carrying method of Item 5-5, in the holding step, the seedling Se can be held by causing the seedling holding device 3 to clamp at least the portion of the leaf and stem of the seedling Se.

(Item 5-6) The seedling carrying method using the agricultural flying apparatus 1 according to Item 5-5, wherein, in the holding step, the seedling holding device 3 presses the holding member 310, 311 against the at least one portion of the leaf or stem of the seedling Se in a direction orthogonal to the up-down direction to generate a clamping force that counters a weight of the seedling Se.

According to the carrying method of Item 5-6, after the holding step, the seedling Se can be reliably held, and the likelihood of the seedling Se falling during flight in the next step can be eliminated or reduced.

(Item 5-7) The seedling carrying method using the agricultural flying apparatus 1 according to any one of Items 5-3 to 5-6, wherein the second flight step includes a step of moving the seedling Se in a horizontal direction after lifting the seedling Se, and the agricultural flying apparatus 1 is caused to fly to a rice transplanter.

According to the carrying method of Item 5-7, the seedling Se can be transported to the destination in a short time.

(Item 5-8) The seedling carrying method using the agricultural flying apparatus 1 according to any one of Items 5-3 to 5-7, further comprising a releasing step of releasing the seedling Se held by the seedling holding device 3 after the second flight step while the agricultural flying apparatus 1 is at the rice transplanter.

Since the carrying method of Item 5-8 further includes the releasing step of setting the seedling holding device 3 to a release state after the second flight step while the agricultural flying apparatus 1 is at the destination, the seedling Se that has reached the destination can be released (unloaded).

(Item 5-9) The seedling carrying method using the agricultural flying apparatus 1 according to Item 5-4, wherein the flying object 2 is a multicopter including a rotary wing device defining a generator 21 to generate a flight propelling force to be applied to a body 20 of the flying object 2, and the rotary wing device is stopped or rotated in a reverse direction in accordance with a timing at which the holding member holds the seedling in the descending flight step or the holding step.

According to the carrying method of Item 5-9, since the rotary wing device is stopped or rotated in the reverse direction in accordance with the timing at which the holding member 310 holds the seedling Se in the descending flight step or the holding step, downward airflow (downwash) generated when the rotary wing device is driven can be eliminated or reduced, so that the likelihood of the seedling Se being disturbed by the wind and tilted can be eliminated or reduced. As a result, the seedling Se can be easily held by the pair of clamping members 310, 311. In particular, when the rotary wing device is rotated in the reverse direction, wind flows in a direction opposite to that of the downwash, so that the seedling Se is raised from the tilted state. Thus, the seedling Se can be more easily held by the pair of clamping members 310, 311.

The present invention is not limited to the above-described example embodiment, and various alterations are possible without departing from the gist of the present invention.

In the above-described example embodiment, the flying object 2 includes four propellers 210. However, the flying object 2 is not limited to this. For example, the flying object 2 may be a tricopter including three propellers 210, a quadcopter including four propellers 210, a hexacopter including six propellers 210, or an octocopter including eight propellers 210. It goes without saying that, when the number of propellers 210 is changed in this manner, the number or shape of the support arms 201 is changed, and a plurality of electric motors 211 for rotationally driving the propellers 210 are provided in accordance with the arrangement of the propellers 210.

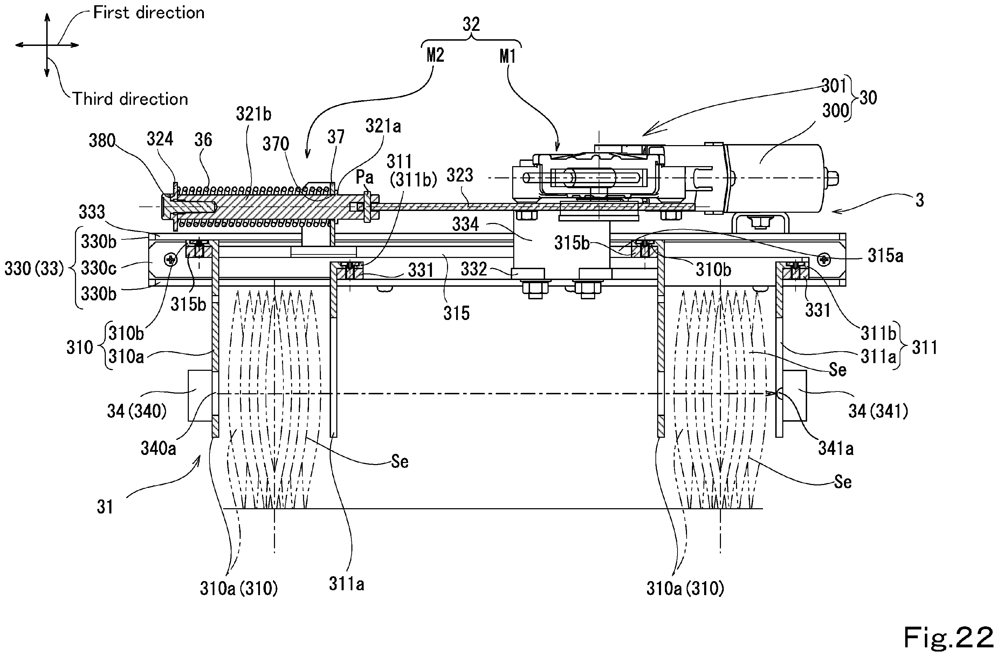

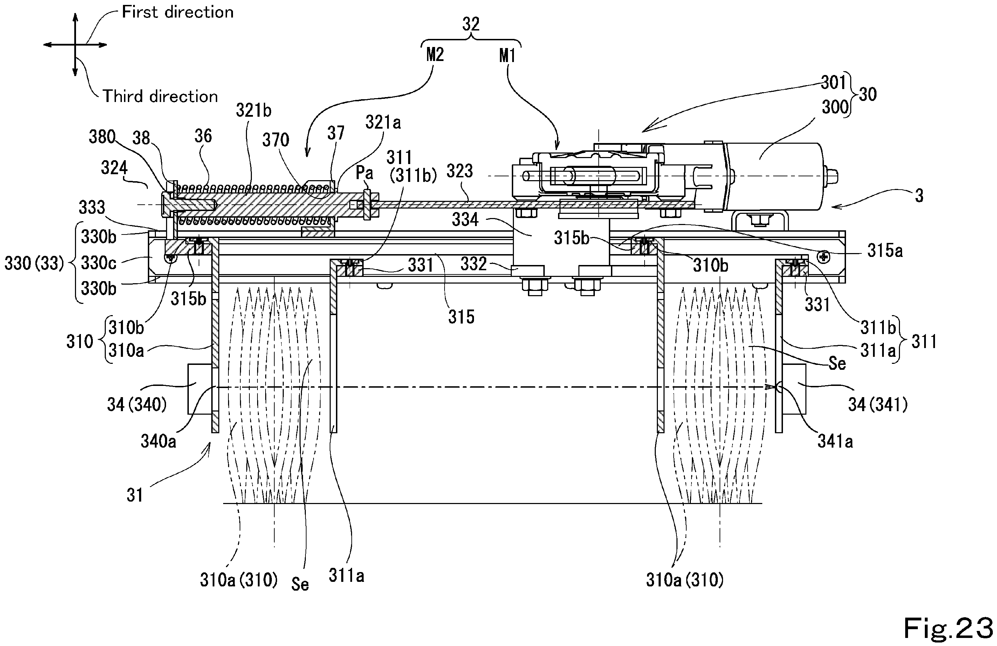

In the above example embodiment, the first mechanism M1 includes the biasing member 36, and the one clamping member 310 is moved toward the other clamping member 311 to hold the seedlings Se by the biasing force of the biasing member 36 (first state). However, this does not imply any limitation. For example, as illustrated in FIGS. 22 and 23, the first mechanism M1 may include the electric actuator 30, and the one clamping member 310 may be moved toward the other clamping member 311 to hold the seedlings Se by driving the electric actuator 30. In this case, the second mechanism M2 may include the biasing member 36 so that, in contrast to the above example embodiment, the one clamping member 310 is moved toward the other clamping member 311 to hold the seedlings Se by driving the electric actuator 30, and the clamped seedlings Se are released by the biasing of the biasing member 36. FIG. 22 illustrates a configuration that is the same as that of the seedling holding device 3 according to the above example embodiment except that the second spring receiver 38 is not provided, and FIG. 23 illustrates a configuration that is the same as that of the seedling holding device 3 according to the above example embodiment except that the first spring receiver 37 is fixed to the frame 33 and the second spring receiver 38 is fixed to the reciprocating body 315. In FIGS. 22 and 23, the transmission path of the biasing force of the biasing member 36 is changed so that the seedlings Se can be held by driving the electric actuator 30.

In the seedling holding device 3 illustrated in FIG. 23, to release the seedlings Se that are clamped, the one clamping member 310 can be separated from the seedlings Se by the biasing force of the biasing member 36. In the seedling holding device 3 illustrated in FIG. 22, the seedlings Se that are clamped (held) can be released by reducing the clamping force (pressing force applied to the seedlings Se) of the clamping member 310 (to an extent such that the effect of the clamping force is cancelled) by the biasing force of the biasing member 36.

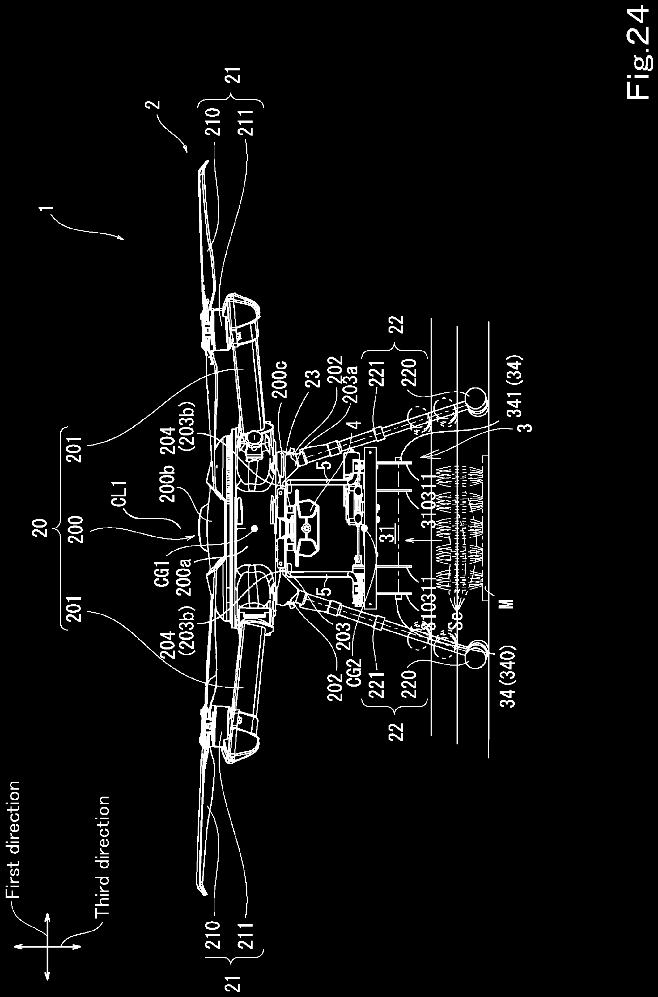

In the above example embodiment, the pair of skids 22, 22 of the flying object 2 are coupled to the body 20 such that the pair of skids 22, 22 are rotatable about the axes extending in the second direction, thus enabling the distance from the body 20 to the ground contact portions 220 of the skids 22, 22 in the third direction (distance from the ground surface to the body 20 in the third direction) to be changed. However, this does not imply any limitation. For example, as illustrated in FIG. 24, the pair of skids 22, 22 may be extendable and retractable in respective directions in which the pair of skids 22, 22 extend from the body 20. In other words, the support leg 221 of each of the pair of skids 22, 22 may be extendable and retractable. Also in this case, the distance from the body 20 to the lower end portions (ground contact portions 220) of the pair of skids 22, 22 in the third direction (up-down direction) can be changed, similarly to the above-described example embodiment, by extending and retracting the support legs 221.

In the above-described example embodiment, the electrical component 4 attached to the bracket 23 of the flying object 2 (body 20) is the imaging device (camera). However, the electrical component 4 is not limited to this. For example, as described above, the electrical component 4 may be a sensor (distance sensor), a transmitter-receiver 341, or the like. Also in these cases, similarly to the above-described example embodiment, electric power is supplied from the battery B of the flying object 2. Additionally, a plurality of electrical components 4 may be attachable to the single bracket 23.

In the method for carrying the seedlings Se using the agricultural flying apparatus 1 according to the above-described example embodiment, rice seedlings Se are described as an object to be carried. However, the seedlings Se to be carried by the agricultural flying apparatus 1 are not limited to this. For example, seedlings Se of vegetables other than rice may be carried. For example, the seedlings Se may be seedlings of leafy vegetables, such as lettuce, cabbage, green onions, onions, and herbs. Accordingly, when the seedlings Se are carried by the agricultural flying apparatus 1, the starting point and the arrival point (destination) of the seedlings Se are not limited to the ridge SH and the rice transplanter in the agricultural field F. When crops are grown from the seedlings Se, the starting point of the agricultural flying apparatus 1 may be the ridge SH or the alley FR around the agricultural field F, and the destination (arrival point) of the agricultural flying apparatus 1 may be a transplanter in the agricultural field F. When the seedlings Se are grown (produced) from seeds, the starting location of the agricultural flying apparatus 1 (seedlings Se) may be a location inside the agricultural field F (or a farm), and the destination (arrival point) of the agricultural flying apparatus 1 (seedlings Se) may be a work site or a shipping site (truck loading/unloading area) for shipping operations.

### Reference Signs List

- 1: agricultural flying apparatus
- 2: flying object
- 3: working device (seedling holding device, agricultural seedling holding device)
- 4: electrical component
- 5: stay (support member)
- 20: body
- 21: generator
- 22: skid
- 23: bracket
- 30: electric actuator
- 31: holding device
- 32: movement mechanism
- 33: frame
- 34: sensing device
- 36: biasing member (compression coil spring)
- 204: attachment portion
- 310: clamping member
- 310a: clamping portion
- 310b: fixing tab
- 311: clamping member
- 311: holding member
- 311a: clamping portion
- 311b: fixing tab
- 326: attachment portion
- CG1: center of gravity
- CG2: center of gravity
- CL1: center line (vertical center line)
- CL2: center line (first horizontal center line)
- CL3: center line (second horizontal center line)
- M1: first mechanism
- M2: second mechanism
- Se: seedlings

## Claims

1. An agricultural seedling holding device comprising:
a pair of clamping members configured to clamp at least one portion of a leaf or stem of a seedling; and
a movement mechanism including a first mechanism to cause the pair of clamping members to approach each other to enable clamping of the at least one portion of the leaf or stem of the seedling, and a second mechanism to cause the pair of clamping members to move away from each other, wherein
at least one of the first mechanism or the second mechanism includes an electric actuator to move at least one clamping member of the pair of clamping members.

2. The agricultural seedling holding device according to claim 1, wherein the first mechanism causes the pair of clamping members to approach each other in a first direction crossing an up-down direction, and the second mechanism causes the pair of clamping members to move away from each other in the first direction.

3. The agricultural seedling holding device according to claim 1, wherein:
one of the first mechanism or the second mechanism includes the electric actuator; and
another of the first mechanism or the second mechanism includes a biasing member to bias and move at least one clamping member of the pair of clamping members toward one side in the first direction.

4. The agricultural seedling holding device according to claim 3, wherein the electric actuator moves the at least one clamping member toward another side in the first direction against biasing of the biasing member.

5. The agricultural seedling holding device according to claim 4, wherein when the other of the first mechanism or the second mechanism moves the at least one clamping member toward the one side in the first direction by the biasing of the biasing member, the one of the first mechanism or the second mechanism stops driving the electric actuator to allow the biasing member to move the at least one clamping member toward the one side in the first direction.

6. The agricultural seedling holding device according to claim 5, wherein:
the first mechanism includes the biasing member and moves the at least one clamping member toward the one side in the first direction by a biasing force of the biasing member to cause the at least one clamping member to approach the other clamping member; and
the second mechanism includes the electric actuator and moves the at least one clamping member toward the other side in the first direction by driving the electric actuator to cause the at least one clamping member to move away from the other clamping member.

7. The agricultural seedling holding device according to claim 6, wherein:
the agricultural seedling holding device includes a plurality of the pairs of clamping members; and
the movement mechanism synchronously moves the at least one clamping member of each of the plurality of pairs of clamping members in the first direction.

8. The agricultural seedling holding device according to claim 1, wherein the electric actuator is located higher than the pair of clamping members.

9. The agricultural seedling holding device according to claim 1, comprising:
a frame to support the movement mechanism, wherein
the frame includes an attachment portion to attach the frame to a flying object configured to fly in air.

10. The agricultural seedling holding device according to any one of claims 1 to 9, comprising:
a sensing device to detect whether or not the seedling is between the pair of clamping members, wherein
when the sensing device detects that the seedling is between the pair of clamping members, the first mechanism causes the pair of clamping members to approach each other and hold the seedling.
